(19) Europäisches Patentamt
European Patent Office
Office européen des brevets

(11) **EP 3 040 541 B1**

(12) **EUROPEAN PATENT SPECIFICATION**

(45) Date of publication and mention
of the grant of the patent:
**04.06.2025 Bulletin 2025/23**

(21) Application number: **15198775.7**

(22) Date of filing: **09.12.2015**

(51) International Patent Classification (IPC):
*F02D 41/00* (2006.01)    *F02D 41/14* (2006.01)
*F02D 41/18* (2006.01)    *F02D 41/24* (2006.01)

(52) Cooperative Patent Classification (CPC):
**F02D 41/0072; F02D 41/0047; F02D 41/144;**
**F02D 41/1456; F02D 41/2438; F02D 41/2451;**
F02D 41/18; F02D 41/2416; F02D 2200/0406;
F02D 2200/0414; F02D 2200/0418; F02M 26/05;
F02M 26/06; Y02T 10/40

(54) **METHOD TO DETERMINE THE MASS FLOW RATE OF A LOW-PRESSURE EXHAUST GAS RECIRCULATION CIRCUIT OF A SUPERCHARGED INTERNAL COMBUSTION ENGINE**

VERFAHREN ZUR BESTIMMUNG DES MASSEDURCHFLUSSES EINES NIEDERDRUCK-ABGASRÜCKFÜHRUNGSKREISLAUFS EINES AUFGELADENEN VERBRENNUNGSMOTORS

PROCÉDÉ POUR DÉTERMINER LE DÉBIT MASSIQUE D'UN CIRCUIT DE RECIRCULATION DE GAZ D'ÉCHAPPEMENT BASSE PRESSION D'UN MOTEUR À COMBUSTION INTERNE SURALIMENTÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.12.2014 IT BO20140687**

(43) Date of publication of application:
**06.07.2016 Bulletin 2016/27**

(73) Proprietor: **Marelli Europe S.p.A.**
**20011 Corbetta (MI) (IT)**

(72) Inventor: **PANCIROLI, Marco**
**40100 BOLOGNA (IT)**

(74) Representative: **Novagraaf Group**
**Chemin de l'Echo 3**
**1213 Onex / Geneva (CH)**

(56) References cited:
EP-A1- 2 284 376     WO-A1-2009/037543
GB-A- 2 475 316     US-A1- 2013 268 176

**Description**

TECHNICAL FIELD

The present invention relates to a method to determine the mass flow rate of a low-pressure exhaust gas recirculation EGR circuit of a supercharged internal combustion engine.

PRIOR ART

As it is known, an internal combustion engine supercharged by means of a turbocharger supercharging system comprises a number of cylinders, each connected to an intake manifold by means of at least one respective intake valve and to an exhaust manifold by means of at least one respective exhaust valve. The intake manifold receives a gas mixture comprising both exhaust gases and fresh air, i.e. air coming from the outside through an intake pipe. The exhaust manifold is connected to an exhaust pipe, which feeds the exhaust gases produced by the combustion to an exhaust system, which releases the gases produced by the combustion into the atmosphere.

The internal combustion engine supercharging system comprises a turbocharger provided with a turbine, which is arranged along the exhaust pipe so as to rotate at a high speed due to the action of the exhaust gases expelled from the cylinders, and a supercharger, which is arranged along the intake pipe and is mechanically connected to the turbine so as to be caused to rotate by the turbine itself in order to increase the pressure of the air present in the feeding pipe.

The internal combustion engine usually also comprises a high-pressure EGR circuit and/or a low-pressure EGR circuit, which comprises, in turn, a bypass pipe, which is provided along the exhaust pipe and is connected in parallel to the turbocharger.

The internal combustion engine is controlled by an electronic control unit, which controls the operation of all the components of the internal combustion engine. The determination of the mass flow rate of the low-pressure exhaust gas recirculation EGR circuit is an extremely important parameter for the engine control strategy implemented by the electronic control unit, as the electronic control unit is configured to determine the spark advance to be operated based on a plurality of parameters comprising the mass flow rate of the low-pressure exhaust gas recirculation EGR circuit.

Therefore, in order to determine the mass flow rate of the low-pressure exhaust gas recirculation EGR circuit, experts have decided to provide, along the bypass pipe, a sensor designed to detect the mass flow rate of the low-pressure exhaust gas recirculation EGR circuit. However, experiments have shown that this solution is affected by the drawback of not being able to ensure good performances both in terms of precision of the mass flow rate detected for the low-pressure exhaust gas recirculation EGR circuit and in terms of reliability in time.

Hence, methods to determine the mass flow rate of a low-pressure exhaust gas recirculation EGR circuit have been suggested, which comprise providing a sensor along the intake pipe, so as to measure the quantity of oxygen present in the gas mixture flowing in the pipe and determine the mass flow rate of the low-pressure exhaust gas recirculation EGR circuit based on the percentage of oxygen detected by the sensor. Documents US-A1-2013268176 and WO-A1-2009037543 describe methods of the type described above; however, even these methods have proven not to be able to ensure good performances both in terms of precision of the mass flow rate detected for the low-pressure exhaust gas recirculation EGR circuit and in terms of reliability in time.

DESCRIPTION OF THE INVENTION

The object of the present invention is to provide a method to determine the mass flow rate of a low-pressure exhaust gas recirculation EGR circuit of a supercharged internal combustion engine, which is not affected by the drawbacks of the prior art and, at the same time, is easy and cheap to be implemented.

According to the present invention there is provided a method to determine the mass flow rate of a low-pressure exhaust gas recirculation EGR circuit of a supercharged internal combustion engine according to the appended claims.

BRIEF DESCRIPTION OF THE DRAWINGS

The present invention will now be described with reference to the accompanying drawings, which show a nonlimiting embodiment thereof, wherein:

- figure 1 schematically shows a supercharged internal combustion engine provided with a low-pressure exhaust gas recirculation EGR circuit and with an electronic control unit implementing the method according to the present invention;
- figure 2 shows the development of a corrective factor of the percentage of oxygen detected by means of sensor of the supercharged internal combustion engine of figure 1; and

- figure 3 shows a matrix where there are stored the values of the corrective factor of figure 2.

PREFERRED EMBODIMENTS OF THE INVENTION

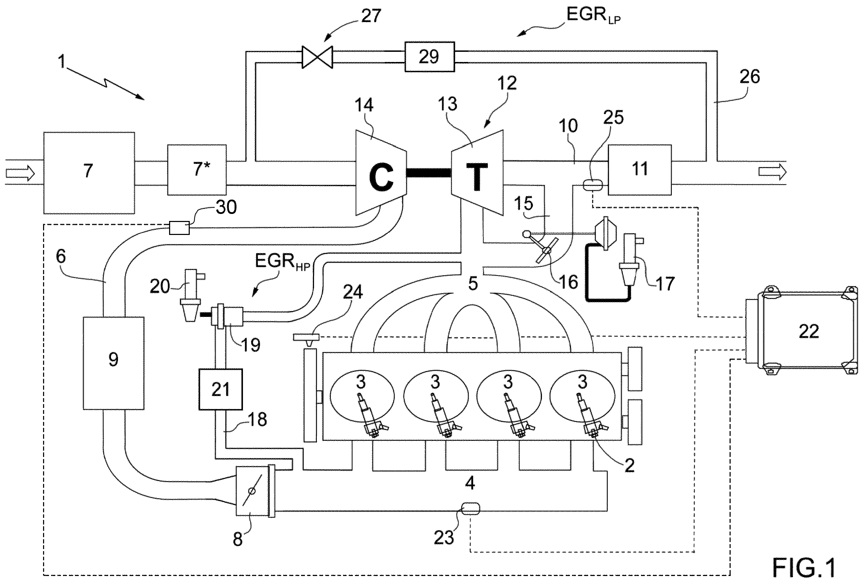

In figure 1, number 1 indicates, as a whole, an internal combustion engine supercharged by means of a turbocharger supercharging system.

The internal combustion engine 1 comprises four injectors 2, which directly inject fuel, preferably gasoline, into four cylinders 3, each connected to an intake manifold 4 by means of at least one respective intake valve (not shown) and to an exhaust manifold 5 by means of at least one respective exhaust valve (not shown).

The intake manifold 4 receives a gas mixture comprising both exhaust gases (as described more in detail below) and fresh air, i.e. air coming from the outside through an intake pipe 6, which is provided with an air filter 7 for the fresh air flow and is regulated by a throttle valve 8. Along the intake pipe 6, downstream of the air filter 7, there is also provided an air flow meter 7*, which is designed to detect the mass of the flow of fresh air taken in by the internal combustion engine 1.

Along the intake pipe 6 there is provided an intercooler 9, which fulfils the function of cooling the air taken in and is preferably built-in in the intake manifold 4. The exhaust manifold 5 is connected to an exhaust pipe 10, which feeds the exhaust gases produced by the combustion to an exhaust system, which releases the gases produced by the combustion into the atmosphere and normally comprises at least one catalytic converter 11 (if necessary, provided with a diesel particulate filter) and at least one silencer (not shown) arranged downstream of the catalytic converter 11.

The supercharging system of the internal combustion engine 1 comprises a turbocharger 12 provided with a turbine 13, which is arranged along the exhaust pipe 10 so as to rotate at a high speed due to the action of the exhaust gases expelled from the cylinders 3, and a supercharger 14, which is arranged along the intake pipe 6 and is mechanically connected to the turbine 13 so as to be caused to rotate by the turbine 13 itself in order to increase the pressure of the air present in the feeding pipe 6.

Along the exhaust pipe 10 there is provided a bypass pipe 15, which is connected in parallel to the supercharger 13 so as to have its ends connected upstream and downstream of the supercharger 13 itself; along the bypass pipe 15 there is provided a wastegate valve 16, which is designed to adjust the flow rate of the exhaust gases flowing through the bypass pipe 15 and is controlled by a solenoid valve 17.

The internal combustion engine 1 comprises, furthermore, a high pressure circuit $EGR_{HP}$, which comprises, in turn, a bypass pipe connected in parallel to the assembly consisting of the four cylinders 3, the intake manifold 4 and the exhaust manifold 5. Along the bypass pipe 18 there is provided a blowoff valve 19, which is designed to adjust the flow rate of the exhaust gases flowing through the bypass pipe 18 and is controlled by an EGR solenoid valve 20. Along the bypass pipe 18, downstream of the blowoff valve 19, there is provided a heat exchanger 21, which fulfils the function of cooling the gases flowing out of the exhaust manifold 5.

The internal combustion engine 1 is controlled by an electronic control unit 22, which controls the operation of all the components of the internal combustion engine 1. The electronic control unit 22 is connected to a sensor 23 measuring the temperature and the pressure of the gas mixture present in the intake manifold 4, to a sensor 24 measuring the number of revolutions per minute of the internal combustion engine 1, and to a sensor 25 (typically a UHEGO or UEGO linear oxygen sensor - which is known and not described below) measuring the air/fuel ratio of the exhaust gases upstream of the catalytic converter 11.

Finally, the internal combustion engine 1 comprises a low pressure circuit $EGR_{LP}$, which comprises, in turn, a bypass pipe 26 arranged along the exhaust pipe 10; the bypass pipe 26 is connected in parallel to the turbocharger 12. In particular, as can be seen from figure 1, bypass pipe 26 originates from the exhaust duct 10 downstream of the turbine 13 and joins the intake pipe 6 upstream of the turbocharger 14. Along the bypass pipe 26 there is provided an EGR valve 27, which is designed to adjust the flow rate of the exhaust gases flowing through the bypass pipe 26. Along the bypass pipe 26, upstream of the valve 27, there is also provided a heat exchanger 29, which fulfils the function of cooling the gases flowing out of the exhaust manifold 5 and into the supercharger 14.

Finally, the electronic control unit 22 is connected to a sensor 30 which measures the quantity of oxygen present in the gas mixture flowing in the intake pipe 6 and is arranged along the intake pipe 6 upstream both of the intercooler 9 and of the throttle valve 8. As can be seen from figure 1, sensor 30 is placed downstream of the turbocharger 14 and sensor 30 is placed downstream of the point wherein the bypass pipe 26 joins the intake pipe 6.

The measure of the quantity of oxygen present in the gas mixture flowing in the intake pipe 6 is used by the electronic control nit 22 to determine the flow rate of the exhaust gases of the low pressure circuit $EGR_{LP}$.

Below you can find a description of the way in which the electronic control unit 22 determines the flow rate of the exhaust gases of the low-pressure EGR circuit $EGR_{LP}$ through the measurement of the quantity of oxygen present in the gas mixture flowing in the intake pipe 6, which is provided by the sensor 30.

The total mass flow rate $M_{TOT}$ of the gas mixture flowing through the intake pipe 6 satisfies the following equation:

$$M_{TOT} = M_{EGR\_LP} + M_{AIR}$$

$$M_{EGR\_LP} = M_{TOT} - M_{AIR} \quad [1]$$

$M_{TOT}$ mass of the gas mixture flowing through the intake pipe 6;
$M_{AIR}$ mass of fresh air coming from the outside that flows through the intake pipe 6; and
$M_{EGR\_LP}$ mass of exhaust gases recirculated through the low-pressure circuit $EGR_{LP}$, which flows through the intake pipe.

We define as follows the quantity $R_{EGR}$, which indicates the incidence of the low-pressure circuit $EGR_{LP}$ on the total mass of the gas mixture flowing through the intake pipe 6:

$$R_{EGR} = M_{EGR\_LP}/M_{TOT} \quad [2]$$

$M_{TOT}$ mass of the gas mixture flowing through the intake pipe 6; and
$M_{EGR\_LP}$ mass of exhaust gases recirculated through the low-pressure circuit $EGR_{LP}$, which flows through the intake pipe.

Inserting the equation [1] in the equation [2], you obtain that:

$$R_{EGR} = (M_{TOT} - M_{AIR}) /M_{TOT} =$$

$$= 1 - (M_{AIR} /M_{TOT} ) \quad [3]$$

$M_{TOT}$ mass of the gas mixture flowing through the intake pipe 6; and
$M_{AIR}$ mass of fresh air coming from the outside that flows through the intake pipe 6.

If we take into account the fact that the mass of fresh air coming from the outside that flows through the intake pipe 6 contains 21% of oxygen, the following equation applies:

$$M_{AIR} * 21 = M_{TOT} * O_{2\_M}$$

$$M_{AIR} / M_{TOT} = O_{2\_M} / 21 \quad [3']$$

$M_{TOT}$ mass of the gas mixture flowing through the intake pipe 6;
$M_{AIR}$ mass of fresh air coming from the outside that flows through the intake pipe 6; and
$O_{2\_M}$ percentage of oxygen contained in the mass of the gas mixture flowing through the intake pipe 6, which is detected by means of the sensor 30.
Inserting the equation [3'] in the equation [3], you can obtain that:

$$R_{EGR} = 1 - (O_{2\_M} / 21) \quad [4]$$

$O_{2\_M}$ percentage of oxygen contained in the mass of the gas mixture flowing through the intake pipe 6, which is detected by means of the sensor 30.
The equation [4] can be simplified considering the fact that the volume of fresh air coming from the outside that flows through the intake pipe 6 contains 21% of oxygen. The resulting formula is the following:

$$R_{EGR} = 1 - (O_2 / 21) \quad [5]$$

$O_2$ percentage of oxygen contained in the volume of the gas mixture flowing through the intake pipe 6, which is detected by means of the sensor 30.
According to a preferred embodiment, the air flow meter 7* is designed to detect the mass $M_{AIR}$ of fresh air coming from the outside that flows through the intake pipe 6, the temperature $T_{AIR\_IN}$ of the mass $M_{AIR}$ of fresh air coming from the outside that flows through the intake pipe 6 and the psychometric level $PSI_{AIR\_IN}$ of the mass $M_{AIR}$ of fresh air coming from the outside that flows through the intake pipe 6.

Therefore, one can improve the estimate of the quantity (or ratio) $R_{EGR}$ indicating the incidence of the low-pressure circuit $EGR_{LP}$ on the mass of the gas mixture flowing through the intake pipe 6 and make the formula [5] more precise as well as introduce the percentage mass flow rate $\%R_{EGR}$ of the low-pressure exhaust gas recirculation EGR circuit $EGR_{LP}$ in the gas mixture flowing through the intake pipe 6 by means of the following formulas:

$$R_{EGR} = 1 - (O_2 / O_{2\_REF}) \quad [6]$$

$$\%R_{EGR} = [1 - (O_2 / O_{2\_REF})] * 100 \quad [6']$$

$$O_{2\_REF} = f(PSI_{AIR\_IN}, T_{AIR\_IN}) \quad [7]$$

$\%R_{EGR}$ percentage mass flow rate of the low-pressure exhaust gas recirculation circuit $EGR_{LP}$ in the gas mixture flowing through the intake pipe 6;
$O_2$ percentage of oxygen contained in the volume of the gas mixture flowing through the intake pipe 6, which is detected by means of the sensor 30;
$O_{2\_REF}$ percentage of oxygen contained in the volume of fresh air coming from the outside that flows through the intake pipe 6;
$PSI_{AIR\_IN}$ psychometric level of the mass $M_{AIR}$ of fresh air coming from the outside that flows through the intake pipe 6, which is provided by the air flow meter 7*; and
$T_{AIR\_IN}$ temperature of the mass $M_{AIR}$ of fresh air coming from the outside that flows through the intake pipe 6, which is provided by the air flow meter 7*.

Since the electronic control unit 22 is designed to determine the spark advance ensuring an optimal combustion for each engine point based on the flow rate of the exhaust gases of the low-pressure circuit $EGR_{LP}$, it is necessary to provide a reliable and sturdy sensor 30, which provides an estimate of the quantity of oxygen present in the gas mixture flowing through the intake pipe 6 that is as accurate as possible.

Therefore, the measurement of the percentage $O_2$ of oxygen contained in the volume of the gas mixture flowing through the intake pipe 6 can be improved by means of the following formula:

$$O_2 * k = O_{2\_COMP} \quad [8]$$

$O_2$ percentage of oxygen contained in the volume of the gas mixture flowing through the intake pipe 6, which is detected by means of the sensor 30;
$k$ compensation factor; and
$O_{2\_COMP}$ percentage of oxygen contained in the volume of the gas mixture flowing through the intake pipe 6.

Starting from the equation [8] and replacing in the equations [5] and [6], you obtain that the quantity $R_{EGR}$ can be expressed as follows:

$$R_{EGR} = 1 - (O_{2\_COMP} / O_{2\_REF}) \quad R_{EGR} = 1 - (O_{2\_COMP} / 21) \quad [9]$$

$$R_{EGR} = 1 - (O_2 * k / O_{2\_REF}) \quad R_{EGR} = 1 - (O_2 * k / 21) \quad [10]$$

$O_2$ percentage of oxygen contained in the volume of the gas mixture flowing through the intake pipe 6, which is detected by means of the sensor 30;
$k$ compensation factor; and
$O_{2\_REF}$ percentage of oxygen contained in the volume of fresh air coming from the outside that flows through the intake pipe 6.

Clearly, once the quantity $R_{EGR}$ and/or the percentage mass flow rate $\%R_{EGR}$ of the low-pressure exhaust gas recirculation circuit $EGR_{LP}$ in the gas mixture flowing through the intake pipe 6 are known and knowing the mass flow rate $M_{TOT}$ of the gas mixture flowing through the intake pipe 6, through the equation [2] one can obtain the mass flow rate $M_{EGR\_LP}$ of exhaust gases recirculated through the low-pressure circuit $EGR_{LP}$, which flows through the intake pipe 6.

Below you can find a description of the way in which the electronic control unit 22 determines the compensation factor k during the normal operation of the internal combustion engine 1, in particular to initialize the values of the compensation factor k as a function of the supercharging pressure P during the normal operation of the internal combustion engine 1.

In the electronic control unit 22 there is stored a matrix M, which provides the compensation factor k as a function of the value of the supercharging pressure in the intake pipe 6 detected by the sensor 23. In particular, the matrix M contains two rows, each comprising a number N of boxes, each box univocally identifying the compensation factor k to be used for a given value of the supercharging pressure.

In a preliminary set up phase, one defines the lower and upper limit values of the supercharging pressure to be considered, indicated with $P_{MIN}$ and $P_{MAX}$. For example, the lower limit value of the supercharging pressure amounts to 600mbar and the upper limit value of the supercharging pressure amounts to 3000 mbar.

Below you can find a description of a first way in which the electronic control unit 22 initializes the matrix M during the normal operation of the internal combustion engine 1.

During the normal operation, in order to allow the matrix M to be initialized, the low-pressure circuit $EGR_{LP}$ is forcedly closed by acting upon the EGR valve 27, which adjusts the flow rate of the exhaust gases flowing through the bypass pipe 26, so that the mass $M_{EGR\_LP}$ of exhaust gases recirculated through the low-pressure circuit $EGR_{LP}$, which flows through the intake pipe 6, is equal to zero. In other words, we create a condition in which the only thing flowing through the intake pipe 6 is the mass $M_{AIR}$ of fresh air coming from the outside.

In order to acquire the values of the compensation factor k, stable conditions must occur; in particular, the value of the supercharging pressure must be constant for a time interval $\Delta t$ with a predetermined duration.

The electronic control unit 22 is designed to recognize when the following condition occurs

$$|dP/ \Delta t| < S_1 \quad [11]$$

dP variation of the supercharging pressure;
$\Delta t$ time interval with a predetermined duration; and
$S_1$ threshold value, which is preferably determined in a preliminary set up phase.

According to a preferred embodiment, further auxiliary stability conditions can be added to the one described above and concerning the value of the supercharging pressure to be met to acquire the values of the compensation factor k; in particular, it is possible to impose a condition in which the speed n of the internal combustion engine 1 and/or the intake efficiency $\eta_{SP}$ (i.e. the ratio between the mass of air actually introduced and trapped in the cylinder 3 and the reference mass, namely the mass of air filling the single cylinder 3 in reference conditions) and/or the flow rate $M_{AIR}$ of fresh air coming from the outside that flows through the intake pipe 6 (detected by the air flow meter 7*) are kept constant for a time interval $\Delta t$ with a predetermined duration.

The electronic control unit 22 is designed to recognize when one or more of the following conditions occur:

$$|dn/ \Delta t| < S_2 \quad [12]$$

$$|d\eta_{SP}/ \Delta t| < S_3 \quad [13]$$

$$|dM_{AIR} / \Delta t| < S_4 \quad [14]$$

dn variation of the speed n of the internal combustion engine 1;
$d\eta_{SP}$ variation of the volumetric efficiency;
$dM_{AIR}$ variation of the mass of fresh air coming from the outside that flows through the intake pipe 6 (detected by the air flow meter 7*);
$\Delta t$ time interval with a predetermined duration; and
$S_2, S_3, S_4$ threshold values, which are preferably determined in a preliminary set up phase.

Once the electronic control unit 22 has made sure that the conditions imposed by [11] - [14] are met, in order to acquire the values of the compensation factor k, it is further necessary to close the canister, so as to avoid the feeding of fuel that might tamper with the learning of the compensation factor k; in particular, it is necessary for the canister to be kept closed for a time interval with a predetermined duration, so as to be able to proceed with the acquisition of the values of the compensation factor k.

Once the electronic control unit 22 has made sure that the conditions imposed by [11] - [14] are met, the initialization of the matrix M and the acquisition of the values of the compensation factor k can start. In other words, the electronic control unit 22 is designed to enable the strategy of initialization of the matrix M and acquisition of the values of the compensation factor k only when the internal combustion engine 1 is in stable conditions, i.e. when there is a constant value of the supercharging pressure P of the internal combustion engine 1.

First of all, the percentage $O_2$ of oxygen contained in the volume of the gas mixture flowing through the intake pipe 6 is detected by means of the sensor 30. Since the mass $M_{EGR\_LP}$ of exhaust gases recirculated through the low-pressure circuit $EGR_{LP}$, which flows through the intake pipe 6, is equal to zero (i.e. the only thing flowing through the intake pipe 6 is the mass $M_{AIR}$ of fresh air coming from the outside), the percentage $O_2$ of oxygen contained in the volume of the gas mixture flowing through the intake pipe 6, which is detected by means of the sensor 30, should be approximately equal to the percentage $O_{2\_REF}$ of oxygen contained in the volume of fresh air coming from the outside that flows through the intake pipe 6, which is determined by means of the air flow meter 7*.

Therefore, the following equation applies:

$$O_2 \quad * \quad k(P) \; = \; O_{2\_REF} \quad [15]$$

$$O_{2\_REF} = f(PSI_{AIR\_IN}, \; T_{AIR\_IN}, \; P_{AIR\_IN}) \quad [7]$$

$O_2$ percentage of oxygen contained in the volume of the gas mixture flowing through the intake pipe 6, which is detected by means of the sensor 30;

$O_{2\_REF}$ percentage of oxygen contained in the volume of fresh air coming from the outside that flows through the intake pipe 6, which is determined by means of the air flow meter 7*;

P supercharging pressure of the internal combustion engine 1;

$PSI_{AIR\_IN}$ psychometric level of the mass $M_{AIR}$ of fresh air coming from the outside that flows through the intake pipe 6, which is provided by the air flow meter 7*;

$P_{AIR\_IN}$ pressure of the mass $M_{AIR}$ of fresh air coming from the outside that flows through the intake pipe 6, which is provided by the air flow meter 7*; and

$T_{AIR\_IN}$ temperature of the mass $M_{AIR}$ of fresh air coming from the outside that flows through the intake pipe 6, which is provided by the air flow meter 7*.

From the equation [15] one cam simply obtain the compensation factor k through:

$$k(P) \; = \; O_{2\_REF} \; / \; O_2 \qquad [15]$$

k(P) compensation factor for the supercharging pressure P;

$O_2$ percentage of oxygen contained in the volume of the gas mixture flowing through the intake pipe 6, which is detected by means of the sensor 30; and

$O_{2\_REF}$ percentage of oxygen contained in the volume of fresh air coming from the outside that flows through the intake pipe 6, which is determined by means of the air flow meter 7*.

According to a preferred embodiment, the value of the compensation factor k(P) for the supercharging pressure P is filtered by means of a filter, for example a first-order, low-pass filter.

Then, the values of the supercharging pressure P of the internal combustion engine 1 and of the corresponding compensation factor k(P) for the supercharging pressure P are stored in the matrix M.

This process goes on until the matrix M is filled. Every time the electronic control unit 22 makes sure that the conditions imposed by [11] - [14] are met, the system goes on with the acquisition of the value of the compensation factor k for the supercharging pressure P at which the operation of the internal combustion engine 1 has stabilized. In other words, the control unit 22 is designed to enable the strategy of acquisition of the values of the compensation factor k every time the internal combustion engine 1 is in stable conditions, i.e. when there is a constant value of the supercharging pressure P of the internal combustion engine 1.

According to a preferred embodiment, in order to prevent the matrix M from containing values of the supercharging pressure P that are very similar to one another, i.e. in order to prevent the values of the supercharging pressure P from being concentrated in an interval of values of the supercharging pressure that is relatively small, it is possible to make sure that:

$$P_i \; - \; P_{i-1} \; > \; S_5 \quad [16]$$

$$P_{i+1} - P_i > S_5 \quad [17]$$

P value of the supercharging pressure of the internal combustion engine 1 being examined;

$P_{i-1}$ previous value of the supercharging pressure of the internal combustion engine 1 stored in the matrix M; and

$P_{i+1}$ following value of the supercharging pressure of the internal combustion engine 1 stored in the matrix M; and

$S_5$ threshold value, which is determined in a preliminary set up phase, is stored in the electronic control unit 22 and is preferably variable as a function of the supercharging pressure P.

In case the conditions imposed by [16] and [17] are met, the electronic control unit 22 is designed to store in the matrix M the new values of the supercharging pressure P of the internal combustion engine 1 and of the corresponding compensation factor k(P) for the supercharging pressure P. If, on the other hand, the comparison produces a negative result and, therefore, one of the conditions or both conditions imposed by [16] and [17] are not met, the electronic control unit 22 is designed to ignore the new values of the supercharging pressure P of the internal combustion engine 1 and of the corresponding compensation factor k(P) for the supercharging pressure P, so as not to store them in the matrix M.

In this way, the distance of each new value of the supercharging pressure P (and, hence, of the corresponding compensation factor k(P) for the supercharging pressure P) stored in the matrix M is at least equal to the threshold value $S_5$, which is determined in a preliminary set up phase, is stored in the electronic control unit 22 and is preferably variable as a function of the supercharging pressure P. In this way, all the values of the supercharging pressure P (and, hence, of the corresponding compensation factors k(P) for the supercharging pressures P) stored in the matrix M are prevented from being concentrated in an interval of values of the supercharging pressure P that is relatively small.

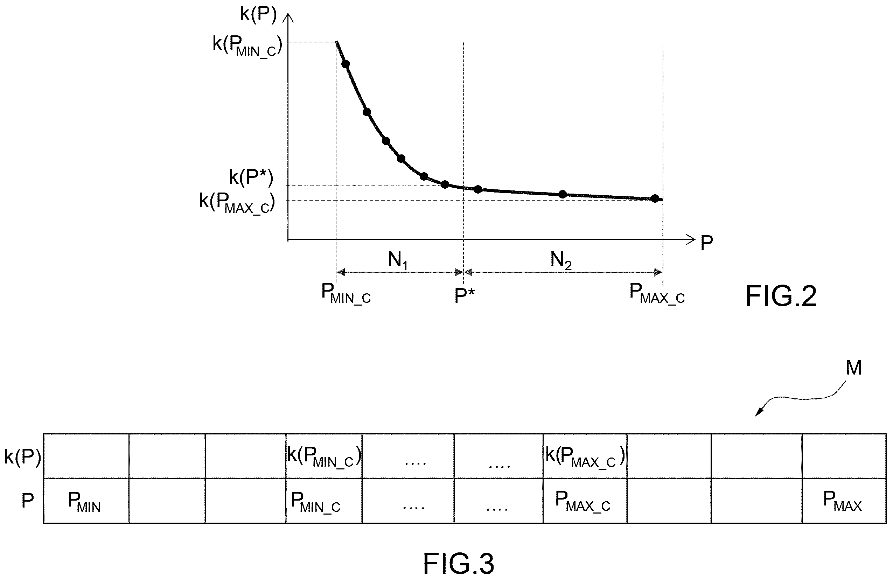

Experiments have shown that the compensation factor k(P) as a function of the supercharging pressure P has a development like the one shown in figure 2. The development of the compensation factor k(P) as a function of the supercharging pressure P is substantially parabolic in a first portion (corresponding to the small values of the supercharging pressure P) up to a critical value of the supercharging pressure P*, which identifies a "knee" in the development of the compensation factor k(P) as a function of the supercharging pressure P, beyond which there is a second portion (corresponding to the great values of the supercharging pressure p), where the compensation factor k(P) as a function of the supercharging pressure P has a linear and almost constant development.

Therefore, inside the matrix M, the learned values of the compensation factor k(P) as a function of the supercharging pressure P should have a distribution s(P) that is variable as a function of the supercharging pressure P.

Since, in the first portion, the compensation facto k(P) as a function of the supercharging pressure P has a substantially parabolic development, it is advisable to store in the matrix M a large number of values distributed in the first portion. Similarly, since, in the second portion, the compensation facto k(P) as a function of the supercharging pressure P has an almost constant development, it is sufficient to store in the matrix M a smaller number of values distributed in the second portion.

Then, we can go on with the learning of the values of the compensation factor k as a function of the supercharging pressure P until the matrix M is filled with a number of values that are properly distributed both in the first portion and in the second portion. In particular, the learning of the values of the compensation factor k as a function of the supercharging pressure P can be considered as concluded if the all the following conditions occur:

$$N_1 > S_6 \qquad \text{for} \qquad P <= P* \quad [18]$$

$$N_2 > S_7 \qquad \text{for} \qquad P > P* \quad [19]$$

$$P_{MIN\_C} - P_{MIN} < S_8 \quad [20]$$

$$P_{MAX} - P_{MAX\_C} < S_9 \quad [21]$$

P supercharging pressure;

P* critical value of the supercharging pressure, which identifies a "knee" in the development of the compensation factor k(P), determined in a preliminary set up phase;

$N_1$ number of values of the compensation factor k as a function of the supercharging pressure P learned in the first portion;

$N_2$ number of values of the compensation factor k as a function of the supercharging pressure P learned in the second portion;

$P_{MIN}$ lower limit value of the supercharging pressure established in a preliminary set up phase and preferably equal to 600 mbar;

$P_{MAX}$ upper limit value of the supercharging pressure established in a preliminary set up phase, for example equal to 3000 mbar;

$P_{MIN\_C}$ lower learned value of the supercharging pressure stored in the matrix M;

$P_{MAX\_C}$ upper learned value of the supercharging pressure stored in the matrix M; and

$S_6$ - $S_9$ threshold values that are determined in a preliminary set up phase and are stored in the electronic control unit 22.

The threshold values $S_6$, $S_7$ must also fulfil the following conditions:

$$S_6 < (P* - P_{MIN})/\min[s(P)] + \Delta_1 \qquad \text{for}$$
$$P_{MIN} < P < P* \quad [18*]$$

$$S_7 < (P_{MAX} - P*)/\min[s(P)] + \Delta_2 \qquad \text{for}$$
$$P* < P < P_{MAX} \quad [19*]$$

$S_6$, $S_7$ threshold values;

$\Delta_1$, $\Delta_2$ adjustment margins determined in a preliminary phase and stored in the electronic control unit 22;

P* critical value of the supercharging pressure, which identifies a "knee" in the development of the compensation factor k(P), determined in a preliminary set up phase;

$P_{MIN}$ lower limit value of the supercharging pressure established in a preliminary set up phase and preferably equal to 600 mbar;

$P_{MAX}$ upper limit value of the supercharging pressure established in a preliminary set up phase and preferably equal to 1500 mbar; and

s(P) distribution of the learned values of the compensation factor k(P) as a function of the supercharging pressure P, which is variable inside the matrix M as a function of the supercharging pressure P.

As already mentioned above, according to a preferred embodiment, the number $N_1$ of values of the compensation factor k as a function of the supercharging pressure P learned in the first portion is greater than the number $N_2$ of values of the compensation factor k as a function of the supercharging pressure P learned in the second portion.

For the pressure values comprised between the upper learned value $P_{MAX\_C}$ of the supercharging pressure and the upper limit value $P_{MAX}$ of the supercharging pressure, the compensation factor k(P) is calculated as follows:

$$k(P) = ((k(P_{MAX\_C}) - k(P_{MAX\_C-1})) / (P_{MAX\_C} - P_{MAX\_C-1})) * g_{MAX} * (P - P_{MAX\_C}) + k(P_{MAX\_C}) \qquad [22]$$

$P_{MAX\_C}$ upper value of the supercharging pressure stored in the matrix M;

$P_{MAX\_C-1}$ value of the supercharging pressure stored in the matrix M prior to $P_{MAX\_C}$;

P current supercharging pressure; and

$g_{MAX}$ corrective coefficient established in a preliminary set up phase and stored in the electronic control unit 22.

On the other hand, for the pressure values comprised between the lower limit value $P_{MIN}$ of the supercharging pressure and the lower learned value $P_{MIN\_C}$ of the supercharging pressure, the compensation factor k(P) is calculated as follows:

$$k(P) = ((k(P_{MIN\_C+1}) - k(P_{MIN\_C})) / (P_{MIN\_C+1} - P_{MIN\_C})) * g_{MIN} * (P_{MIN\_C} - P) + k(P_{MIN\_C}) \qquad [23]$$

$P_{MIN\_C}$ lower learned value of the supercharging pressure stored in the matrix M;

$P_{MIN\_C\_+1}$ learned value of the supercharging pressure stored in the matrix M following $P_{MIN\_C}$;

P current supercharging pressure; and

$g_{MIN}$ corrective coefficient established in a preliminary set up phase and stored in the electronic control unit 22.

Once the compensation factor k(P) for the pressure values comprised between the upper learned value $P_{MAX\_C}$ of the supercharging pressure and the upper limit value $P_{MAX}$ of the supercharging pressure and for the pressure values comprised, on the other hand, between the lower limit value $P_{MIN}$ of the supercharging pressure and the lower learned value $P_{MIN\_C}$ of the supercharging pressure have been calculated, the matrix M has been filled ans stored in the electronic control unit 22 and this corresponds to the end of the step of initialization and learning of the values of the compensation factor k as a function of the supercharging pressure P.

According to a further embodiment, the pressure values comprised between the upper learned value $P_{MAX\_C}$ of the supercharging pressure and the upper limit value $P_{MAX}$ of the supercharging pressure and the pressure values comprised, on the other hand, between the lower limit value $P_{MIN}$ of the supercharging pressure and the lower learned value $P_{MIN\_C}$ of the supercharging pressure are extrapolated in a linear manner as described above, without being stored in the electronic control unit 22.

During the normal operation, once the step of initialization and learning of the values of the compensation factor k as a function of the supercharging pressure P has ended, the low-pressure circuit $EGR_{LP}$ is opened. The electronic control unit 22 is designed so that, at the end of the step of initialization and learning of the values of the compensation factor k as a function of the supercharging pressure P, both the mass $M_{AIR}$ of fresh air coming from the outside and the mass $M_{EGR\_LP}$ of exhaust gases recirculated through the low-pressure circuit $EGR_{LP}$ flow through the intake pipe 6. In order to acquire the values of the compensation factor k, stable conditions must occur; in particular, the value of the supercharging pressure must be constant for a time interval $\Delta t$ with a predetermined duration.

During the normal operation of the internal combustion engine with the low-pressure circuit $EGR_{LP}$ open, it is anyway possible to carry out the learning of further compensation factors k(P) as a function of the supercharging pressure P; in particular, the learning of further compensation factors k(P) can be carried out for values of the supercharging pressure P that are smaller than the lower learned value $P_{MIN\_C}$ of the supercharging pressure and for values of the supercharging pressure P that are greater than the upper learned value $P_{MAX\_C}$ of the supercharging pressure.

The control unit 22 is designed to recognize when the conditions imposed by [11] - [14] are fulfilled and, at the same time, the mass $M_{EGR\_LP}$ of exhaust gases recirculated through the low-pressure circuit $EGR_{LP}$ is equal to zero, i.e. when the low-pressure circuit is closed, without having imposed it, but based on the management in the engine point taken into account.

For values of the supercharging pressure P that are smaller than the lower learned value $P_{MIN\_C}$ of the supercharging pressure, the electronic control unit 22 is designed to compare the value of the supercharging pressure P with the difference between the lower learned value $P_{MIN\_C}$ of the supercharging pressure and a tolerance value $\Delta P_{MIN}$ (determined in a preliminary set up phase and stored in the electronic control unit 22, for example equal to 50 mbar). In case the value of the supercharging pressure P is smaller than or equal to the difference between the lower learned value $P_{MIN\_C}$ of the supercharging pressure and the tolerance value $\Delta P_{MIN}$, the values of the supercharging pressure P of the internal combustion engine and of the corresponding compensation factor k(P) for the supercharging pressure P are stored in the matrix M.

Vice versa, in case the value of the supercharging pressure P is greater than the difference between the lower learned value $P_{MIN\_C}$ of the supercharging pressure and the tolerance value $\Delta P_{MIN}$, the values of the supercharging pressure P of the internal combustion engine 1 and of the corresponding compensation factor k(P) for the supercharging pressure P are not stored in the matrix M.

During the normal operation of the internal combustion engine with the low-pressure circuit $EGR_{LP}$ open, it is possible to carry out the learning of further compensation factors k(P) as a function of the supercharging pressure P for values of the supercharging pressure P that are smaller than the lower learned value $P_{MIN\_C}$ of the supercharging pressure as long as the difference between the lower learned value $P_{MIN\_C}$ of the supercharging pressure and the lower limit value $P_{MIN}$ of the supercharging pressure (established in a preliminary set up phase and preferably equal to 600 mbar) is smaller than or equal to the tolerance value $\Delta P_{MIN}$. In other words, as soon as the difference between the lower learned value $P_{MIN\_C}$ of the supercharging pressure and the lower limit value $P_{MIN}$ of the supercharging pressure (established in a preliminary set up phase and preferably equal to 600 mbar) is greater than the tolerance value $\Delta P_{MIN}$, the electronic control unit 22 is designed to disable the possibility of learning further compensation factors k(P) as a function of the supercharging pressure P for values of the supercharging pressure P that are smaller than the lower learned value $P_{MIN\_C}$ of the supercharging pressure.

For values of the supercharging pressure P that are greater than the upper learned value $P_{MAX\_C}$ of the supercharging pressure, the electronic control unit 22 is designed to compare the value of the supercharging pressure P with the difference between the upper learned value $P_{MAX\_C}$ of the supercharging pressure and a tolerance value $\Delta P_{MAX}$ (determined in a preliminary set up phase and stored in the electronic control unit 22, for example equal to 100 mbar). In case the value of the supercharging pressure P is greater than or equal to the difference between the upper learned value $P_{MAX\_C}$ of the supercharging pressure and the tolerance value $\Delta P_{MAX}$, the values of the supercharging pressure P of the internal combustion engine 1 and of the corresponding compensation factor k(P) for the supercharging pressure P are stored in the matrix M.

Vice versa, in case the value of the supercharging pressure P is smaller than the difference between the upper learned value $P_{MAX\_C}$ of the supercharging pressure and the tolerance value $\Delta P_{MAX}$, the values of the supercharging pressure P of the internal combustion engine 1 and of the corresponding compensation factor k(P) for the supercharging pressure P are not stored in the matrix M.

During the normal operation of the internal combustion engine with the low-pressure circuit $EGR_{LP}$ open, it is possible to carry out the learning of further compensation factors k(P) as a function of the supercharging pressure P for values of the supercharging pressure P that are greater than the upper learned value $P_{MAX\_C}$ of the supercharging pressure as long as the difference between the upper limit value $P_{MAX}$ of the supercharging pressure (established in a preliminary set up phase and preferably equal to 3000 mbar) and the upper learned value $P_{MAX\_C}$ of the supercharging pressure is smaller than or equal to the tolerance value $\Delta P_{MAX}$. In other words, as soon as the difference between the upper limit value $P_{MAX}$ of the supercharging pressure (established in a preliminary set up phase and preferably equal to 3000 mbar) and the upper learned value $P_{MAX\_C}$ of the supercharging pressure is greater than the tolerance value $\Delta P_{MAX}$, the electronic control unit 22 is designed to disable the possibility of learning further compensation factors k(P) as a function of the supercharging pressure P for values of the supercharging pressure P that are greater than the lower learned value $P_{MAX\_C}$ of the supercharging pressure.

According to a first embodiment, during the normal operation, once the step of initialization and learning of the values of the compensation factor k as a function of the supercharging pressure P has ended and once the low-pressure circuit $EGR_{LP}$ has been opened, the electronic control unit 22 is designed to determine the value of the compensation factor k for a given supercharging pressure P' non included in the matrix M by means of a linear interpolation of the two values of the compensation factor k that correspond to the two values of supercharging pressure P that are the closest to the supercharging pressure P'.

In case the supercharging pressure P' is comprised within the interval defined by the upper learned value $P_{MAX\_C}$ of the supercharging pressure and by the lower learned value $P_{MIN\_C}$ of the supercharging pressure, the electronic control unit 22 is designed to determine the compensation factor k as a function of the supercharging pressure P' through a linear interpolation of the factor K relating to a pair of already learned values of the supercharging pressure P.

According to a second embodiment, an interpolation function k(P) is determined, which is obtained starting from the values stored in the matrix M and provides the compensation factor k as a function of the supercharging pressure P. According to a preferred embodiment, the interpolation function k(P) is determined so as to minimize the standard deviation of the values of the compensation factor k learned and stored in the matrix M. During the normal operation, once the step of initialization and learning of the values of the compensation factor k as a function of the supercharging pressure P has ended and once the low-pressure circuit $EGR_{LP}$ has been opened, the electronic control unit 22 is designed to determine the value of the compensation factor k for a given supercharging pressure P' included in the matrix M by means of the interpolation function k(P), which is obtained starting from the values stored in the matrix M.

Once the electronic control unit 22 has ended the acquisition of the values of the compensation factor k, the canister does not need any longer to be kept closed in order to avoid the feeding of fuel that might tamper with the learning of the compensation factor k; in particular, the electronic control unit 22, once the acquisition of the values of the compensation factor k has ended, is designed to allow the canister to be opened so as to enable the feeding of fuel.

Below you can find a description of a second way in which the electronic control unit 22 learns the matrix M during the normal operation of the internal combustion engine 1.

Since the sensor 25 is cannot be directly used to estimate the quantity $R_{EGR}$ indicating the incidence of the low-pressure circuit $EGR_{LP}$ on the mass of the gas mixture flowing through the intake pipe 6 and necessary for controlling the combustion and since the matrix M still has to be learned, the quantity $R_{EGR}$ indicating the incidence of the low-pressure circuit $EGR_{LP}$ on the mass of the gas mixture flowing through the intake pipe 6 can be estimated as follows:

$$R_{EGR} = 1 - (M_{AIR} / M_{TOT})$$

$$= 1 - (M_{AIR} / (M_{TOT\_SD} * \lambda_S)) \quad [24]$$

$M_{TOT\_SD}$ total mass flow rate of the gas mixture flowing through the intake pipe 6, which is estimated by means of a model, for example by means of the known "Speed Density" model;

$M_{AIR}$ mass of fresh air coming from the outside that flows through the intake pipe 6 and is detected by means of the air flow meter 7*; and

$\lambda_S$ air/fuel ratio of the exhaust gases upstream of the catalytic converter 11 detected by means of the sensor 25 and saturated to 1.

The estimate of the total mass flow rate $M_{TOT\_SD}$ of the gas mixture flowing through the intake pipe 6 towards the cylinders 3 is carried out by means of a model, which receives, as input data, the values of the pressure and the temperature in the intake manifold 4 (detected by means of sensors), the values of the pressure and the temperature in the exhaust manifold 5 (obtained by means of a model), the correction for the temperature of the cooling liquid, etc.; for example the known "Speed Density" model with the following formula:

$$M_{TOT\_SD} = \eta_V * V_{cyl} * \rho * n/2 \quad [25]$$

$M_{TOT\_SD}$ total mass flow rate of the gas mixture flowing through the intake pipe 6, which is estimated by means of the known "Speed Density" model;
$\eta_V$ estimated intake efficiency;
$V_{cyl}$ volume of the cylinders 3 / displacement of the internal combustion engine 1 [m³];
$\rho$ density of the air in reference conditions; and
n number of revolutions of the engine per unit of time.

In other words, the total mass flow rate $M_{TOT\_SD}$ of the gas mixture flowing through the intake pipe 6 is calculated by means of a model.

Since it is possible to use a model according to the the description above or it is possible to use the signals coming from the sensor 25 but not corrected yet, the low-pressure circuit $EGR_{LP}$ is limited, so that the mass $M_{EGR\_LP}$ of exhaust gases recirculated through the low-pressure circuit $EGR_{LP}$, which flows through the intake pipe 6, is smaller than a limit value $M_{EGR\_LP\_MAX}$, which is variable as a function of the speed n and of the volume intake efficiency $\eta_{SP}$ of the internal combustion engine 1.

In this case, again, during the normal operation, in order to enable the initialization of the matrix M and acquire the values of the compensation factor k, stable conditions must occur; in particular, the value of the supercharging pressure must be constant for a time interval $\Delta t$ with a predetermined duration.

The electronic control unit 22 is designed to recognize whether all the following conditions are fulfilled at the same time:

$$|dP/ \Delta t| < S_1 \quad [11]$$

$$|dn/ \Delta t| < S_2 \quad [12]$$

$$|d\eta_{SP}/ \Delta t| < S_3 \quad [13]$$

$$|dM_{AIR} / \Delta t| < S_4 \quad [14]$$

$$|dM_{TOT} / \Delta t| < S_{10} \quad [26]$$

$$|d\lambda_S / \Delta t| < S_{11} \quad [27]$$

dP variation of the supercharging pressure;
dn variation of the speed n of the internal combustion engine 1;
$d\eta_{SP}$ variation of the volumetric efficiency;
$dM_{AIR}$ variation of the mass of fresh air coming from the outside that flows through the intake pipe 6 (detected by the air flow meter 7*);
$dM_{TOT}$ variation of the total mass of the gas mixture flowing through the intake pipe 6;
$d\lambda_S$ variation of the air/fuel ratio of the exhaust gases upstream of the catalytic converter 11 detected by means of the sensor 25;
$\Delta t$ time interval with a predetermined duration; and
$S_1, S_2, S_3, S_4, S_{10}, S_{11}$ threshold values, which are preferably determined in a preliminary set up phase.

Once the electronic control unit 22 has made sure that the conditions imposed by [11] - [14] and [26] - [27] are met, the initialization of the matrix M and the acquisition of the values of the compensation factor k can start. In other words, the electronic control unit 22 is designed to enable the strategy of acquisition of the values of the compensation factor k only when the internal combustion engine 1 is in stable conditions, i.e. with a substantially constant value of the supercharging pressure P of the internal combustion engine 1, of the speed n of the internal combustion engine 1, of the mass $M_{AIR}$ of fresh air coming from the outside that flows through the intake pipe 6 (detected by the air flow meter 7*), of the volumetric efficiency $\eta_{SP}$ of the total mass $M_{TOT}$ of the gas mixture flowing through the intake pipe 6, and of the air/fuel ratio $\lambda_S$ of the exhaust gases upstream of the catalytic converter 11, which is detected by means of the sensor 25.

In order to determine the compensation factor k, the following equations are used:

$$O_2 * k \ (P) \ = \ O_{2\_EST} \ [28]$$

$$O_{2\_EST} \ = \ (M_{AIR} \ / (M_{TOT\_SD} * \lambda_S)) \ * \ (O_{2\_REF} \ / \ O_2) \ [29]$$

$O_2$ percentage of oxygen contained in the volume of the gas mixture flowing through the intake pipe 6, which is detected by means of the sensor 30;

k (P) compensation factor as a function of the supercharging pressure P;

$O_{2\_REF}$ percentage of oxygen contained in the volume of fresh air coming from the outside that flows through the intake pipe 6;

$O_{2\_EST}$ percentage of oxygen contained in the volume of gas flowing through the intake pipe 6;

$M_{TOT\_SD}$ total mass flow rate of the gas mixture flowing through the intake pipe 6, which is estimated, for example, by means of the known "Speed Density" model;

$M_{AIR}$ mass of fresh air coming from the outside that flows through the intake pipe 6 and is detected by means of the air flow meter 7*; and

$\lambda_S$ air/fuel ratio of the exhaust gases upstream of the catalytic converter 11 detected by means of the sensor 25.

The electronic control unit 22 is designed to determine the compensation factor k during the normal operation of the internal combustion engine 1, namely to initialize the values of the compensation factor k as a function of the supercharging pressure P in the matrix M during the normal operation of the internal combustion engine 1, as provided for in the description above.

Once the learning of the matrix M has ended, it is not necessary any longer to limit the low-pressure circuit $EGR_{LP}$ so that the mass $M_{EGR\_LP}$ of exhaust gases recirculated through the low-pressure circuit $EGR_{LP}$, which flows through the intake pipe 6, is smaller than a limit value $M_{EGR\_LP\_MAX}$ and the quantity $R_{EGR}$ is used, which indicates the incidence of the low-pressure circuit $EGR_{LP}$ on the mass of the gas mixture flowing through the intake pipe 6 obtained through the compensation of the measure of the sensor 25.

In the description above, we explicitly made reference to the case in which the factor k(P) is variable as a function of the supercharging pressure P.

According to a further embodiment, the factor k(P, $M_{TOT}$) is variable as a function both of the supercharging pressure P and of the total mass $M_{TOT}$ of the gas mixture flowing through the intake pipe 6 and hitting the sensor 30. In this case, the electronic control unit 22 is designed to determine the compensation factor k, i.e. to initialize the values of the compensation factor k as a function both of the supercharging pressure P and of the total mass $M_{TOT}$ of the gas mixture flowing through the intake pipe 6 and hitting the sensor 30 in the matrix M during the normal operation of the internal combustion engine 1, as provided for in the description above.

Generally speaking, according to a further embodiment, the factor k($x_1$, $x_2$, ... $x_n$) is variable as a function of a plurality of parameters comprising the supercharging pressure P, the total mass $M_{TOT}$ of the gas mixture flowing through the intake pipe 6 and hitting the sensor 30, the speed of the gas mixture flowing through the intake pipe 6 and hitting the sensor 30, the percentage of carbon dioxide in the gas mixture flowing through the intake pipe 6 and hitting the sensor 30, the percentage of steam (or absolute humidity) in the gas mixture flowing through the intake pipe 6 and hitting the sensor 30, and - finally - the temperature of the wall on which the sensor 30 is mounted.

In this case, the electronic control unit 22 is designed to determine the compensation factor k, i.e. to initialize the values of the compensation factor k as a function of the plurality of parameters (comprising the supercharging pressure P, the total mass $M_{TOT}$ of the gas mixture flowing through the intake pipe 6 and hitting the sensor 30, the psychometric level $PSI_{AIR\_IN}$ of the mass $M_{AIR}$ of fresh air coming from the outside that flows through the intake pipe 6, etc.) in the matrix M during the normal operation of the internal combustion engine 1, as provided for in the description above. Evidently, according to this last embodiment, the time needed for the initialization of the matrix M becomes significantly longer as the number of parameters being considered increases.

According to a further embodiment, the measurement of the percentage $O_2$ of oxygen contained in the volume of the gas mixture flowing through the intake pipe 6 can be expressed by means of the following formula:

$$O_2 * k(x_1, \ x_2, \ ... \ x_n) \ + \ OF \ = \ O_{2\_COMP} \ [31]$$

$O_2$ percentage of oxygen contained in the volume of the gas mixture flowing through the intake pipe 6, which is detected by means of the sensor 30;
k compensation factor, which is variable as a function of a plurality of parameters;
$O_{2\_COMP}$ percentage of oxygen contained in the volume of the gas mixture flowing through the intake pipe 6; and
OF preferably constant offset.

The formula [30] can be simplified as follows:

$$O_2 * k(P) + OF = O_{2\_COMP} \quad [32]$$

$O_2$ percentage of oxygen contained in the volume of the gas mixture flowing through the intake pipe 6, which is detected by means of the sensor 30;
k compensation factor, which is variable as a function of the compensation pressure P;
$O_{2\_COMP}$ percentage of oxygen contained in the volume of the gas mixture flowing through the intake pipe 6; and
OF preferably constant offset.

In this case, again, during the normal operation, in order to enable the initialization of the offset OF and the matrix M and acquire the values of the compensation factor k, stable conditions must occur; in particular, the value of the supercharging pressure P must be constant for a time interval $\Delta t$ with a predetermined duration.
The electronic control unit 22 is designed to recognize whether all the following conditions are fulfilled at the same time:

$$|dP/ \Delta t| < S_1 \quad [11]$$

$$|dn/ \Delta t| < S_2 \quad [12]$$

$$|d\eta_{SP}/ \Delta t| < S_3 \quad [13]$$

$$|dM_{AIR} / \Delta t| < S_4 \quad [14]$$

$$|dM_{TOT} / \Delta t| < S_{10} \quad [26]$$

$$|d\lambda_S / \Delta t| < S_{11} \quad [27]$$

$$|d\gamma / \Delta t| < S_{12} \quad [33]$$

dP variation of the supercharging pressure;
dn variation of the speed n of the internal combustion engine 1;
$d\eta_{SP}$ variation of the volumetric efficiency;
$dM_{AIR}$ variation of the mass of fresh air coming from the outside that flows through the intake pipe 6 (detected by the air flow meter 7*);
$dM_{TOT}$ variation of the total mass of the gas mixture flowing through the intake pipe 6;
$d\lambda_S$ variation of the air/fuel ratio of the exhaust gases upstream of the catalytic converter 11 detected by means of the sensor 25;
$d\gamma$ variation;
$\Delta t$ time interval with a predetermined duration; and
$S_1$, $S_2$, $S_3$, $S_4$, $S_{10}$, $S_{11}$, $S_{12}$ threshold values, which are preferably determined in a preliminary set up phase.

Once the electronic control unit 22 has made sure that the conditions imposed by [11]-[14], [26]-[27] and [33] are met, the acquisition of the offset OF, the initialization of the matrix M and the acquisition of the values of the compensation factor k can start. In other words, the electronic control unit 22 is designed to enable the strategy of acquisition of the offset OF and of the values of the compensation factor k only when the internal combustion engine 1 is in stable conditions, i.e. with a substantially constant value of the supercharging pressure P of the internal combustion engine 1, of the speed n of the internal combustion engine 1, of the mass $M_{AIR}$ of fresh air coming from the outside that flows through the intake pipe 6 (detected by the air flow meter 7*), of the volumetric efficiency $\eta_{SP}$ of the total mass $M_{TOT}$ of the gas mixture flowing through the intake pipe 6, and of the air/fuel ratio $\lambda_S$ of the exhaust gases upstream of the catalytic converter 11, which is detected by means of the sensor 25.

At first, during the normal operation of the internal combustion engine 1, the low-pressure circuit $EGR_{LP}$ is forcedly closed so that the mass $M_{EGR\_LP}$ of exhaust gases recirculated through the low-pressure circuit $EGR_{LP}$, which flows through the intake pipe 6, is equal to zero. In other words, we create a condition in which the only thing flowing through the intake pipe 6 is the mass $M_{AIR}$ of fresh air coming from the outside.

The percentage $O_2$ of oxygen contained in the volume of the gas mixture flowing through the intake pipe 6 is detected by means of the sensor 30. Therefore, the following equation applies:

$$O_2 \quad * \ k(P) \ + \ OF \ = \ O_{2\_REF} \quad [34]$$

$$O_{2\_REF} = f(PSI_{AIR\_IN}, \ T_{AIR\_IN}) \quad [7]$$

$O_2$ percentage of oxygen contained in the volume of the gas mixture flowing through the intake pipe 6, which is detected by means of the sensor 30;

$O_{2\_REF}$ percentage of oxygen contained in the volume of fresh air coming from the outside that flows through the intake pipe 6, which is determined by means of the air flow meter 7*;

OF preferably constant offset;

P supercharging pressure of the internal combustion engine 1;

$PSI_{AIR\_IN}$ psychometric level of the mass $M_{AIR}$ of fresh air coming from the outside that flows through the intake pipe 6, which is provided by the air flow meter 7*; and

$T_{AIR\_IN}$ temperature of the mass $M_{AIR}$ of fresh air coming from the outside that flows through the intake pipe 6, which is provided by the air flow meter 7*.

Then, during the normal operation of the internal combustion engine 1, the low-pressure circuit $EGR_{LP}$ is limited so that the mass $M_{EGR\_LP}$ of exhaust gases recirculated through the low-pressure circuit $EGR_{LP}$, which flows through the intake pipe 6, is smaller than a limit value $M_{EGR\_LP\_MAX}$, which is variable as a function of the speed n of the internal combustion engine 1 and of the volumetric efficiency $\eta_{SP}$.

The percentage $O_2$ of oxygen contained in the volume of the gas mixture flowing through the intake pipe 6 is detected by means of the sensor 30. Hence, the following equation deriving from the equation [28] applies:

$$O_2 * k \ (P) \ + \ OF \ = \ O_{2\_EST} \quad [35]$$

$O_2$ percentage of oxygen contained in the volume of the gas mixture flowing through the intake pipe 6, which is detected by means of the sensor 30;

k compensation factor;

OF preferably constant offset; and

$O_{2\_EST}$ percentage of oxygen contained in the volume of fresh air coming from the outside that flows through the intake pipe 6, which is estimated by means of the known "Speed Density" model.

The system of the two equations [34] and [35] has two unknown values and allows you to establish the value of the offset OF (considered constant) and, subsequently, based on the offset OF, to determine the compensation factor k during the normal operation of the internal combustion engine 1.

According to a preferred embodiment, once the learning of the matrix M - as provided for in the description above - has ended, the electronic control unit 22 is designed to correct the learned values of the compensation factor k, in particular close to the lower learned value $P_{MIN\_C}$ of the supercharging pressure and the upper learned value $P_{MAX\_C}$ of the supercharging pressure.

The electronic control unit 22 is designed to determine a corrective factor $k_{AGE}$, which is used in the matrix M for the correction of the learned compensation factors k.

In order to acquire the values of the corrective factor $k_{AGE}$, again, stable conditions must occur; in particular, the value of the supercharging pressure must be constant for a time interval $\Delta t$ with a predetermined duration. The electronic control unit 22 is designed to recognize when the condition [11] occurs. According to a preferred embodiment, further auxiliary stability conditions can be added to the one described above and concerning the value of the supercharging pressure to be met to acquire the values of the corrective factor $k_{AGE}$; in particular, it is possible to impose a condition in which the values are learned only if the speed n of the internal combustion engine 1 and/or the intake efficiency $\eta_{SP}$ (i.e. the ratio between the mass of air actually introduced and trapped in the cylinder 3 and the reference mass, namely the mass of air filling the single cylinder 3 in reference conditions) and/or the flow rate $M_{AIR}$ of fresh air coming from the outside that flows through the intake pipe 6 (detected by the air flow meter 7*) are kept constant for a time interval $\Delta t$ with a predetermined duration. The electronic control unit 22 is designed to recognize when one or more of the conditions [12] - [14] occur. Once the electronic control unit 22 has made sure that the conditions imposed by [11] - [14] are met, in order to acquire the values of the corrective factor $k_{AGE}$, it is further necessary to close the canister, so as to avoid the feeding of fuel that might tamper with the learning of the corrective factor $k_{AGE}$; in particular, it is necessary for the canister to be kept closed for a time interval with a predetermined duration, so as to be able to proceed with the acquisition of the values of the corrective factor $k_{AGE}$. Furthermore, it is evident that, in order to allow the corrective factors $k_{AGE}$ to be learned, the low-pressure circuit $EGR_{LP}$ must be forcedly closed by acting upon the EGR valve 27, which adjusts the flow rate of the exhaust gases flowing through the bypass pipe 26, so that the mass $M_{EGR\_LP}$ of exhaust gases recirculated through the low-pressure circuit $EGR_{LP}$, which flows through the intake pipe 6, is equal to zero. In other words, we create a condition in which the only thing flowing through the intake pipe 6 is the mass $M_{AIR}$ of fresh air coming from the outside.

The corrective factor $k_{AGE}$ is calculated by means of the following formula:

$$k_{AGE} = O_{2\_REF} / O_2 \ast k(P) \quad [30]$$

$$O_{2\_REF} = f(PSI_{AIR\_IN}, T_{AIR\_IN}, P_{AIR\_IN}) \quad [7]$$

$k_{AGE}$ corrective factor of the compensation factor k as a function of the supercharging pressure P;
k compensation factor as a function of the supercharging pressure P;
$O_2$ percentage of oxygen contained in the volume of the gas mixture flowing through the intake pipe 6, which is detected by means of the sensor 30;
$O_{2\_REF}$ percentage of oxygen contained in the volume of fresh air coming from the outside that flows through the intake pipe 6, which is determined by means of the air flow meter 7*;
P supercharging pressure of the internal combustion engine 1;
$PSI_{AIR\_IN}$ psychometric level of the mass $M_{AIR}$ of fresh air coming from the outside that flows through the intake pipe 6, which is provided by the air flow meter 7*;
$P_{AIR\_IN}$ pressure of the mass $M_{AIR}$ of fresh air coming from the outside that flows through the intake pipe 6, which is provided by the air flow meter 7*; and
$T_{AIR\_IN}$ temperature of the mass $M_{AIR}$ of fresh air coming from the outside that flows through the intake pipe 6, which is provided by the air flow meter 7*.

The corrective factor $k_{AGE}$ is calculated for at least two values $P_{MIN\_AGE}$, $P_{MAX\_AGE}$ of the supercharging pressure, which must fulfil the following conditions:

$$P_{MIN\_C} < P_{MIN\_AGE} < P_{MIN\_C} + \Delta_{MIN}$$

$$P_{MAX\_C} - \Delta_{MAX} < P_{MAX\_AGE} < P_{MAX\_C}$$

$P_{MIN\_C}$ lower learned value of the supercharging pressure;
$P_{MAX\_C}$ upper learned value of the supercharging pressure;
$P_{MIN\_AGE}$ lower value of the supercharging pressure for which to calculate the corrective factor $K_{AGE}$;
$P_{MAX\_AGE}$ upper value of the supercharging pressure for which to calculate the corrective factor $K_{AGE}$;
$\Delta_{MIN}$ $\Delta_{MAX}$ quantities defined in a preliminary set up phase and defining the range of the intervals of the supercharging pressure in which to calculate the corrective factor $k_{AGE}$;
Once the corrective factor $k_{AGE}$ for the two values $P_{MIN\_AGE}$, $P_{MAX\_AGE}$ of the supercharging pressure P has been determined, the electronic control unit 22 is designed to determine the value of the corrective factor $k_{AGE}$ for the further values of the supercharging pressure P' by means of a linear interpolation of the two values of the corrective factor $k_{AGE}$ determined for the two values $P_{MIN\_AGE}$, $P_{MAX\_AGE}$ of the supercharging pressure.

Once the step of determination of the corrective factors $K_{AGE}$ has ended, the electronic control unit 22 is designed to calculate an overall corrective factor $K_{TOT}$ as a function both of the compensation factor k and of the corrective factor $K_{AGE}$. The overall corrective factor $k_{TOT}$ is calculated by means of the following formula:

$$k_{TOT} (P) = k_{AGE} * k(P) \quad [30']$$

$k_{AGE}$ corrective factor of the compensation factor k as a function of the supercharging pressure P;
k compensation factor as a function of the supercharging pressure P; and
$k_{TOT}$ overall corrective factor.

Therefore, the measurement of the percentage $O_2$ of oxygen contained in the volume of the gas mixture flowing through the intake pipe 6 can be further improved by updating the formula [8] as follows:

$$O_2 * k_{TOT} (P) = O_{2\_TOT} \quad [8']$$

$O_2$ percentage of oxygen contained in the volume of the gas mixture flowing through the intake pipe 6, which is detected by means of the sensor 30;
$k_{TOT}$ overall corrective factor; and
$O_{2\_TOT}$ percentage of oxygen contained in the volume of the gas mixture flowing through the intake pipe 6.

Starting from the equation [8'] and replacing in the equation [10], you obtain that the quantity $R_{EGR}$ can be expressed as follows:

$$R_{EGR} = 1 - (O_2 * k_{TOT} (P) / O_{2\_REF}) \quad R_{EGR} = 1 - (O_{2\_TOT} / O_{2\_REF}) \quad [10']$$

$O_2$ percentage of oxygen contained in the volume of the gas mixture flowing through the intake pipe 6, which is detected by means of the sensor 30;
$k_{TOT}$ overall corrective factor; and
$O_{2\_REF}$ percentage of oxygen contained in the volume of fresh air coming from the outside that flows through the intake pipe 6.

Clearly, generally speaking and considering the case in which the percentage $O_{2\_REF}$ of oxygen contained in the volume of fresh air coming from the outside that flows through the intake pipe 6, which is determined by means of the air flow meter 7*, is calculated considering an offset OF, preferably a constant one, like the one set forth in the formula [34], said formula can be changed as follows:

$$O_2 * k_{TOT} (P) = O_{2\_REF} - OF \quad [36]$$

$$O_2 * [k_{AGE} * k(P)] = O_{2\_REF} - OF \quad [37]$$

$$O_2 = (O_{2\_REF} - OF) / [k_{AGE} * k(P)] \quad [38]$$

$O_2$ percentage of oxygen contained in the volume of the gas mixture flowing through the intake pipe 6, which is detected by means of the sensor 30;
$k_{AGE}$ corrective factor of the compensation factor k as a function of the supercharging pressure P;
k compensation factor as a function of the supercharging pressure P;
$k_{TOT}$ overall corrective factor;
OF preferably constant offset; and
$O_{2\_REF}$ percentage of oxygen contained in the volume of fresh air coming from the outside that flows through the intake pipe 6, which is determined by means of the air flow meter 7*.

In this case, the electronic control unit 22 is designed to detect, by means of the sensor 30, the percentage $O_2$ of oxygen contained in the volume of the gas mixture flowing through the intake pipe 6 and to determine the offset OF by solving the following system of equations:

$$O_2 * k_{TOT} + OF = O_{2\_REF} \quad [39]$$

$$O_2 * k_{TOT} + OF = O_{2\_EST} \quad [40]$$

$O_{2\_EST}$ percentage of oxygen contained in the volume of fresh air coming from the outside, which is estimated by means of a "Speed Density" model and by the flow rate of an air flow meter 7*, which is designed to detect the mass of the flow of fresh air taken in by the internal combustion engine 1;

$O_2$ percentage of oxygen contained in the volume of the gas mixture flowing through the intake pipe 6, which is detected by means of the sensor 30;

$k_{TOT}$ overall corrective factor; and

$O_{2\_REF}$ percentage of oxygen contained in the volume of fresh air coming from the outside that flows through the intake pipe 6.

The electronic control unit 22 is designed to determine the compensation factor k during the normal operation of the internal combustion engine 1, namely to initialize the values of the compensation factor k as a function of the supercharging pressure P in the matrix M during the normal operation of the internal combustion engine 1, as provided for in the description above, once the value of the offset OF has been established.

According to an embodiment, the learning strategy described in the description above is repeated at substantially regular intervals, after the internal combustion engine 1 has covered a given number of km.

The methods to determine the mass flow rate $R_{EGR}$ of the low-pressure exhaust gas recirculation circuit $EGR_{LP}$ described above have the advantage of ensuring good performances both in terms of precision and in terms of reliability in time.

Furthermore, the strategies described above are easy and cheap to be implemented in the electronic control unit 22 of an internal combustion engine 1, as they require a small calculation capacity of the electronic control unit 22 itself.

**Claims**

1.  A method to determine the mass flow rate of a low-pressure exhaust gas recirculation EGR circuit ($EGR_{LP}$) of a supercharged internal combustion engine (1) comprising an intake manifold (4), which receives a gas mixture through an intake pipe (6), and a turbocharger (12), which is provided with a turbine (13) and with a supercharger (14) arranged along the intake pipe (6); the low-pressure exhaust gas recirculation EGR circuit ($EGR_{LP}$) comprises a bypass pipe (26) originating from an exhaust duct (10) downstream of the turbine (13) and joining the intake pipe (6) upstream of the turbocharger (14) and an EGR valve (27);

    the supercharged internal combustion engine (1) comprises, furthermore, an electronic control unit (22) and a first sensor (30), which is designed to measure the quantity of oxygen available in the gas mixture flowing through the intake pipe (6); and a second sensor (23) for measuring the temperature and the pressure of the gas mixture present in an intake manifold (4);
    the method comprises the steps of:

    detecting, by means of the first sensor (30), the percentage ($O_2$) of oxygen contained in the volume of the gas mixture flowing through the intake pipe (6);
    controlling the supercharged internal combustion engine (1) so as to reduce to zero the mass flow rate of a low-pressure exhaust gas recirculation EGR circuit ($EGR_{LP}$);
    determining the percentage ($O_{2\_REF}$) of oxygen contained in the volume of fresh air coming from the outside that flows through the intake pipe (6) through the formula $O_{2\_REF}=f(PSI_{AIR\_IN}, T_{AIR\_IN})$ ([7]); and
    determining a compensation factor (k), wherein the compensation factor (k) is variable as a function of the supercharging pressure (P) in the intake pipe (6) and is calculated as the ratio between the percentage ($O_{2\_REF}$) of oxygen contained in the volume of fresh air coming from the outside that flows through the intake pipe (6) and the percentage ($O_2$) of oxygen contained in the volume of the gas mixture flowing through the intake pipe (6), which is detected by means of the first sensor (30);
    controlling the supercharged internal combustion engine (1) so as to feed a mass flow rate other than zero of a low-pressure exhaust gas recirculation EGR circuit ($EGR_{LP}$) as soon as a given number of compensation factors (k) are learned; and
    determining the mass flow rate of the low-pressure exhaust gas recirculation EGR circuit ($EGR_{LP}$) as a function of said compensation factor (k) through the formula $R_{EGR}=1-(k*O_2/O_{2\_REF})$ ([7]).

2.  A method according to claim 1 and comprising the further step of determining the percentage mass flow rate ($\%R_{EGR}$)

of the low-pressure exhaust gas recirculation EGR circuit ($EGR_{LP}$) in the gas mixture flowing through the intake pipe (6) through the formula:

$$\%R_{EGR} = [1 - (O_2/O_{2\_REF})] * 100 \; [6']$$

$\%R_{EGR}$ percentage mass flow rate of the low-pressure exhaust gas recirculation EGR circuit ($EGR_{LP}$) in the gas mixture flowing through the intake pipe (6);
$O_2$ percentage of oxygen contained in the volume of the gas mixture flowing through the intake pipe (6), which is detected by means of the first sensor (30); and
$O_{2\_REF}$ percentage of oxygen contained in the volume of fresh air coming from the outside that flows through the intake pipe (6).

3. A method according to claim 1 or 2 and comprising the further step of determining the percentage ($O_{2\_REF}$) of oxygen contained in the volume of fresh air coming from the outside that flows through the intake pipe (6) as a function of the psychometric level ($PSI_{AIR\_IN}$), of the temperature ($T_{AIR\_IN}$) of the mass ($M_{AIR}$) of fresh air coming from the outside that flows through the intake pipe (6), and of the pressure ($P_{AIR\_IN}$) of the mass ($M_{AIR}$) of fresh air coming from the outside that flows through the intake pipe (6).

4. A method according to claim 2 or 3 and comprising the further step of determining the percentage mass flow rate ($\%R_{EGR}$) of the low-pressure exhaust gas recirculation EGR circuit ($EGR_{LP}$) as a function of the product between said compensation factor (k) and the percentage ($O_2$) of oxygen contained in the volume of the gas mixture flowing through the intake pipe (6), which is detected by means of the first sensor (30).

5. A method according to any of the previous claims, wherein the step of determining the compensation factor (k) is carried out only under stable conditions of the supercharged internal combustion engine (1), in particular of the supercharging pressure (P) in the intake pipe (6).

6. A method according to any of the previous claims and comprising the further step of storing, in a matrix (M), the values of the quantity (P, $M_{TOT}$) and the corresponding compensation factors (k).

7. A method according to claim 6, wherein each value of the quantity (P, $M_{TOT}$) and the corresponding compensation factor (k) stored in the matrix (M) satisfy the conditions:

$$P_i - P_{i-1} > S_5 \; [16]$$

$$P_{i+1} - P_i > S_5 \; [17]$$

P current value of the quantity (P, $M_{TOT}$) being examined;
$P_{i-1}$ $P_{i+1}$ adjacent values of the quantity (P, $M_{TOT}$) already stored in the matrix (M); and
$S_5$ first threshold value.

8. A method according to claim 7, wherein the threshold value ($S_5$) is variable as a function of the quantity (P, $M_{TOT}$).

9. A method according to any of the claims from 6 to 8 and comprising the further steps of

determining a critical value (P*) of the quantity (P, $M_{TOT}$) in the trend of the compensation factor k(P);
determining a lower limit value ($P_{MIN}$) of the quantity (P, $M_{TOT}$) and an upper limit value ($P_{MAX}$) of the quantity (P, $M_{TOT}$) ; and
storing, in the matrix (M), the values of the quantity (P, $M_{TOT}$) and the corresponding compensation factors (k) until the following conditions are satisfied:

$$N_1 > S_6 \quad \text{for} \quad P <= P* \; [18]$$

$$N_2 > S_7 \quad \text{for} \quad P > P* \; [19]$$

$$P_{MIN\_C} - P_{MIN} < S_8 \quad [20]$$

$$P_{MAX} - P_{MAX\_C} < S_9 \quad [21]$$

P quantity (P, $M_{TOT}$);
P* critical value of the quantity (P, $M_{TOT}$) in the trend of the compensation factor k(P);
$N_1$, $N_2$ number of learned values of the compensation factor (k);
$P_{MIN}$ lower limit value of the quantity (P, $M_{TOT}$);
$P_{MAX}$ upper limit value of the quantity (P, $M_{TOT}$);
$P_{MIN\_C}$ lower learned value of the quantity (P, $M_{TOT}$) stored in the matrix (M);
$P_{MAX\_C}$ upper learned value of the quantity (P, $M_{TOT}$) stored in the matrix (M); and
$S_6$, $S_7$, $S_8$, $S_9$ threshold values.

10. A method according to claim 9, wherein the second and the third values ($S_6$, $S_7$) satisfy the following conditions:

$$S_6 < (P* - P_{MIN})/\min[s(P)] + \Delta_1 \quad \text{for} \quad P_{MIN} < P < P* \quad [18*]$$

$$S_7 < (P_{MAX} - P*)/\min[s(P)] + \Delta_2 \quad \text{for} \quad P* < P < P_{MAX} \quad [19*]$$

$S_6$, $S_7$ threshold values;
$\Delta_1$, $\Delta_2$ adjustment margins;
P* critical value of the quantity (P, $M_{TOT}$) in the trend of the compensation factor k(P);
$P_{MIN}$ lower limit value of the quantity (P, $M_{TOT}$);
$P_{MAX}$ upper limit value ($P_{MAX}$) of the quantity (P, $M_{TOT}$);
s(P) distribution of the learned values of the compensation factor k(P) inside the matrix (M), which is variable as a function of the quantity (P, $M_{TOT}$).

11. A method according to claim 9 or 10 and comprising the further step of storing, in the matrix (M), the values of the quantity (P, $M_{TOT}$) and the corresponding compensation factors (k) calculated by means of the following formulas:

$$k(P) = ((k(P_{MAX\_C}) - k(P_{MAX\_C-1}))/(P_{MAX\_C} - P_{MAX\_C-1})) * g_{MAX} * (P - P_{MAX\_C}) + k(P_{MAX\_C}) \quad [22] \tag{22}$$

$$k(P) = ((k(P_{MIN\_C+1}) - k(P_{MIN\_C}))/(P_{MIN\_C+1} - P_{MIN\_C})) * g_{MIN} * (P_{MIN\_C} - P) + k(P_{MIN\_C}) \quad [23] \tag{23}$$

$P_{MAX\_C}$ upper value of the supercharging pressure stored in the matrix (M);
$P_{MAX\_C-1}$ value of the supercharging pressure stored in the matrix (M) prior to the upper value of the supercharging pressure stored in the matrix (M);
P current supercharging pressure;
$g_{MAX}$ corrective coefficient established in a preliminary set up phase and stored;
$P_{MIN\_C}$ lower learned value of the supercharging pressure stored in the matrix (M);
$P_{MIN\_C\_+1}$ learned value of the supercharging pressure stored in the matrix (M) subsequent to the lower learned value of the supercharging pressure stored in the matrix (M);
$g_{MIN}$ corrective coefficient established in a preliminary set up phase and stored.

12. A method according to any of the claims from 6 to 11 and comprising the further step of determining, during the normal operation of the supercharged internal combustion engine (1), the compensation factors (k) as a function of the quantity (P, $M_{TOT}$) through an interpolation of the learned values of the compensation factor k(P) stored in the matrix (M).

13. A method according to any of the previous claims and comprising the further steps of:

determining an offset (OF), preferably a constant one, to determine the percentage ($O_2$) of oxygen contained in the volume of the gas mixture flowing through the intake pipe (6), which is detected by means of the first sensor (30); and

determining the mass flow rate of the low-pressure exhaust gas recirculation EGR circuit ($EGR_{LP}$) as a function of said offset (OF).

14. A method according to claim 13 and comprising the further steps of:

detecting, by means of the first sensor (30), the percentage ($O_2$) of oxygen contained in the volume of the gas mixture flowing through the intake pipe (6);

determining the offset (OF) through the solution of the following equation system

$$O_2 * k(P) + OF = O_{2\_REF} \quad [34]$$

$$O_2 * k(P) + OF = O_{2\_EST} \quad [35]$$

$O_{2\_EST}$ percentage of oxygen contained in the volume of fresh air coming from the outside, which is estimated by means of a "Speed Density" model and by the flow rate of an air flow meter (7*), which is designed to detect the mass of the flow of fresh air taken in by the internal combustion engine (1);

$O_2$ percentage of oxygen contained in the volume of the gas mixture flowing through the intake pipe (6), which is detected by means of the first sensor (30);

k (P) compensation factor; and

$O_{2\_REF}$ percentage of oxygen contained in the volume of fresh air coming from the outside that flows through the intake pipe (6).

15. A method according to any of the previous claims and comprising the further steps of:

determining an overall corrective factor ($K_{TOT}$) as a function of the compensation factor (k); wherein the overall corrective factor ($K_{TOT}$) is obtained by means of the ratio of the compensation factor (k) and of a corrective factor ($k_{AGE}$); and

determining the percentage mass flow rate ($\%R_{EGR}$) of the low-pressure exhaust gas recirculation EGR circuit ($EGR_{LP}$) as a function of said overall corrective factor ($k_{TOT}$).

16. A method according to claim 15 and comprising the further step of calculating the corrective factor ($k_{AGE}$) for at least one pair of significant values ($P_{MIN\_AGE}$, $P_{MAX\_AGE}$) of the quantity (P, $M_{TOT}$) by means of the following formula:

$$k_{AGE} = O_{2\_REF} / O_2 * k(P_{MIN\_AGE}, P_{MAX\_AGE}) \quad [30]$$

$$P_{MIN\_C} < P_{MIN\_AGE} < P_{MIN\_C} + \Delta_{MIN}$$

$$P_{MAX\_C} - \Delta_{MAX} < P_{MAX\_AGE} < P_{MAX\_C}$$

$O_2$ percentage of oxygen contained in the volume of the gas mixture flowing through the intake pipe (6), which is detected by means of the first sensor (30);

$O_{2\_REF}$ percentage of oxygen contained in the volume of fresh air coming from the outside that flows through the intake pipe (6);

k compensation factor as a function of the quantity (P, $M_{TOT}$) ;

$P_{MIN\_C}$ lower learned value of the quantity (P, $M_{TOT}$);

$P_{MAX\_C}$ upper learned value of the quantity (P, $M_{TOT}$);

$P_{MIN\_AGE}$ lower significant value of the quantity (P, $M_{TOT}$);

$P_{MAX\_AGE}$ upper significant value of the quantity (P, $M_{TOT}$);

$\Delta_{MIN}$ $\Delta_{MAX}$ quantities defining the range of the intervals in which to calculate the corrective factor ($k_{AGE}$).

17. A method according to claim 16 and comprising the further step of determining the corrective factors ($k_{AGE}$) through an interpolation of the learned values of the corrective factor ($k_{AGE}$) for the pair of significant values ($P_{MIN\_AGE}$, $P_{MAX\_AGE}$) of the quantity (P, $M_{TOT}$).

18. A method according to any of the claims from 15 to 17 and comprising the further steps of:

determining an offset (OF), preferably a constant one, to determine the percentage ($O_2$) of oxygen contained in the volume of the gas mixture flowing through the intake pipe (6), which is detected by means of the first sensor (30); and
determining the mass flow rate of the low-pressure exhaust gas recirculation EGR circuit ($EGR_{LP}$) as a function of said offset (OF).

19. A method according to claim 18 and comprising the further steps of:

detecting, by means of the first sensor (30), the percentage ($O_2$) of oxygen contained in the volume of the gas mixture flowing through the intake pipe (6);
determining the offset (OF) through the solution of the following equation system

$$O_2 * k_{TOT} + OF = O_{2\_REF} \quad [34]$$

$$O_2 * k_{TOT} + OF = O_{2\_EST} \quad [35]$$

$O_{2\_EST}$ percentage of oxygen contained in the volume of fresh air coming from the outside, which is estimated by means of a "Speed Density" model and by the flow rate of an air flow meter (7*), which is designed to detect the mass of the flow of fresh air taken in by the internal combustion engine (1);
$O_2$ percentage of oxygen contained in the volume of the gas mixture flowing through the intake pipe (6), which is detected by means of the first sensor (30);
$K_{TOT}$ overall corrective factor as a function of the quantity (P, $M_{TOT}$); and
$O_{2\_REF}$ percentage of oxygen contained in the volume of fresh air coming from the outside that flows through the intake pipe (6).

20. A method according to one of the claims from 7 to 19, wherein the low-pressure exhaust gas recirculation EGR circuit ($EGR_{LP}$) is forcedly closed, so that the mass flow rate of the low-pressure exhaust gas recirculation EGR circuit ($EGR_{LP}$) that flows through the intake pipe (6) is equal to zero, so as to allow the matrix (M) to be initialized.

21. A method according to claim 20 and comprising the further step of recognizing when one or more of the following conditions occur, so as to allow the matrix (M) to be initialized:

$$|dn/ \Delta t| < S_2 \quad [12]$$

$$|d\eta_{SP}/ \Delta t| < S_3 \quad [13]$$

$$|dM_{AIR} / \Delta t| < S_4 \quad [14]$$

dn variation of the speed (n) of the internal combustion engine (1);
$d\eta_{SP}$ variation of the volumetric efficiency;
$dM_{AIR}$ variation of the mass of fresh air coming from the outside that flows through the intake pipe (6);
$\Delta t$ time interval with a predetermined duration; and
$S_2$, $S_3$, $S_4$ threshold values, which are preferably determined in a preliminary set up phase.

22. A method according to claim 21 and comprising the further steps of:

recognizing when the mass flow rate ($EGR_{LP}$) of the low-pressure exhaust gas recirculation EGR circuit ($EGR_{LP}$) that flows through the intake pipe (6) is equal to zero and, at the same time, the fuel flow is equal to zero; and
storing in the matrix (M) the values of the quantity (P, $M_{TOT}$) and the corresponding compensation factors (k) in correspondence to values of the quantity (P, $M_{TOT}$) that are smaller than the lower learned value ($P_{MIN\_C}$) and to values of the quantity (P, $M_{TOT}$) that are greater than the upper learned value ($P_{MAX\_C}$).

23. A method according to claim 22 and comprising the further steps of:

comparing the value of the quantity (P, $M_{TOT}$) with the difference between the lower learned value ($P_{MIN\_C}$) and a tolerance value ($\Delta P_{MIN}$); and

storing in the matrix (M) the value of the quantity (P, $M_{TOT}$) and the corresponding compensation factor (k), in case the value of the quantity (P, $M_{TOT}$) is smaller than or equal to the difference between the lower learned value ($P_{MIN\_C}$) and the tolerance value ($\Delta P_{MIN}$).

24. A method according to claim 22 or 23 and comprising the further steps of:

comparing the value of the quantity (P, $M_{TOT}$) with the difference between the upper learned value ($P_{MAX\_C}$) and a tolerance value ($\Delta P_{MAX}$); and

storing in the matrix (M) the value of the quantity (P, $M_{TOT}$) and the corresponding compensation factor (k), in case the value of the quantity (P, $M_{TOT}$) is greater than or equal to the difference between the upper learned value ($P_{MAX\_C}$) and a tolerance value ($\Delta P_{MAX}$).

25. A method according to any of the claims from 20 to 24 and comprising the further step of closing a fuel vapour collecting manifold to forbid the passage of fuel in order to allow the matrix (M) to be initialized.

26. A method according to any of the claims from 20 to 25 and comprising the further step of opening the low-pressure exhaust gas recirculation EGR circuit ($EGR_{LP}$) after the matrix (M) has been initialized, so that the mass flow rate of the low-pressure exhaust gas recirculation EGR circuit ($EGR_{LP}$) that flows through the intake pipe (6) is greater than zero.

27. A method according to claim 25 and comprising the further step of permitting the passage of fuel once the matrix (M) has been initialized.

28. A method according to any of the previous claims and comprising the further step of re-initializing the compensation factor (k) and/or the corrective factor ($k_{AGE}$) at substantially regular intervals and, in particular, after a given number of km covered by the supercharged internal combustion engine (1).

**Patentansprüche**

1. Verfahren zum Bestimmen des Massenstroms eines Niederdruck-Abgasrückführungskreislaufs, Niederdruck-EGR-Kreislaufs, ($EGR_{LP}$) eines aufgeladenen Verbrennungsmotors (1), umfassend einen Ansaugkrümmer (4), der ein Gasgemisch durch ein Ansaugrohr (6) aufnimmt, und einen Turbolader (12), der mit einer Turbine (13) und einem entlang des Ansaugrohrs (6) angeordneten Lader (14) versehen ist; wobei der Niederdruck-Abgasrückführungskreislauf, Niederdruck-EGR-Kreislauf, ($EGR_{LP}$) ein Bypassrohr (26), das von einem Abgaskanal (10) stromabwärts der Turbine (13) ausgeht und mit dem Ansaugrohr (6) stromaufwärts des Turboladers (14) verbunden ist, und ein EGR-Ventil (27) umfasst; der aufgeladene Verbrennungsmotor (1) des Weiteren eine elektronische Steuereinheit (22) und einen ersten Sensor (30), der dazu eingerichtet ist, die Menge an Sauerstoff zu messen, die in dem durch das Ansaugrohr (6) strömenden Gasgemisch verfügbar ist; und einen zweiten Sensor (23) zum Messen der Temperatur und des Drucks des in einem Ansaugkrümmer (4) vorhandenen Gasgemischs umfasst; wobei das Verfahren die Schritte umfasst:

Erfassen des Prozentsatzes ($O_2$) von Sauerstoff, der im Volumen des durch das Ansaugrohr (6) strömenden Gasgemischs enthalten ist, mittels des ersten Sensors (30);
Steuern des aufgeladenen Verbrennungsmotors (1), um den Massenstrom eines Niederdruck-Abgasrückführungskreislaufs, Niederdruck-EGR-Kreislaufs, ($EGR_{LP}$) auf null zu reduzieren;
Bestimmen des Prozentsatzes ($O_{2\_REF}$) von Sauerstoff, der im Frischluftvolumen enthalten ist, das von außen durch das Ansaugrohr (6) strömt, durch die Formel $O_{2\_REF}=f(PSI_{AIR\_IN}, T_{AIR\_IN})$ ([7]); und
Bestimmen eines Kompensationsfaktors (k), wobei der Kompensationsfaktor (k) in Abhängigkeit vom Ladedruck (P) in dem Ansaugrohr (6) variabel ist und aus dem Verhältnis zwischen dem Prozentsatz ($O_{2\_REF}$) von Sauerstoff, der im Frischluftvolumen enthalten ist, das von außen durch das Ansaugrohr (6) strömt, und dem Prozentsatz ($O_2$) von Sauerstoff, der im Volumen des durch das Ansaugrohr (6) strömenden Gasgemischs enthalten ist und mittels des ersten Sensors (30) erfasst wird, berechnet wird;
Steuern des aufgeladenen Verbrennungsmotors (1), um einen Massenstrom ungleich null eines Niederdruck-Abgasrückführungskreislaufs, Niederdruck-EGR-Kreislaufs, ($EGR_{LP}$) zuzuführen, sobald eine bestimmte Anzahl von Kompensationsfaktoren (k) gelernt ist; und
Bestimmen des Massenstroms des Niederdruck-Abgasrückführungskreislaufs, Niederdruck-EGR-Kreislaufs, (EGR$_{LP}$) in Abhängigkeit des Kompensationsfaktors (k) durch die Formel R$_{EGR}$=1-(k*O$_2$/O$_{2\_REF}$) ([7]).

2. Verfahren nach Anspruch 1 und umfassend den weiteren Schritt des Bestimmens des prozentualen Massenstroms (%R$_{EGR}$) des Niederdruck-Abgasrückführungskreislaufs, Niederdruck-EGR-Kreislaufs, (EGR$_{LP}$) im durch das Ansaugrohr (6) strömenden Gasgemisch durch die Formel:

$$\%R_{EGR} = [1 - (O_2/O_{2\_REF})] * 100 \; [6']$$

%R$_{EGR}$ prozentualer Massenstrom des Niederdruck-Abgasrückführungskreislaufs, Niederdruck-EGR-Kreislaufs, (EGR$_{LP}$) im durch das Ansaugrohr (6) strömenden Gasgemisch;
O$_2$ Prozentsatz von Sauerstoff, der im Volumen des durch das Ansaugrohr (6) strömenden Gasgemischs enthalten ist und mittels des ersten Sensors (30) erfasst wird; und
O$_{2\_REF}$ Prozentsatz von Sauerstoff, der im von Frischluftvolumen enthalten ist, das von außen durch das Ansaugrohr (6) strömt.

3. Verfahren nach Anspruch 1 oder 2 und umfassend den weiteren Schritt des Bestimmens des Prozentsatzes (O$_{2\_REF}$) von Sauerstoff, der im Frischluftvolumen enthalten ist, das von außen durch das Ansaugrohr (6) strömt, in Abhängigkeit des psychometrischen Niveaus (PSI$_{AIR\_IN}$), der Temperatur (T$_{AIR\_IN}$) der Masse (M$_{AIR}$) der Frischluft, die von außen durch das Ansaugrohr (6) strömt, und des Drucks (P$_{AIR\_IN}$) der Masse (M$_{AIR}$) von Frischluft, die von außen durch das Ansaugrohr (6) strömt.

4. Verfahren nach Anspruch 2 oder 3 und umfassend den weiteren Schritt des Bestimmens des prozentualen Massenstroms (%R$_{EGR}$) des Niederdruck-Abgasrückführungskreislaufs, Niederdruck-EGR-Kreislaufs, (EGR$_{LP}$) in Abhängigkeit des Produkts zwischen dem Kompensationsfaktor (k) und dem Prozentsatz (O$_2$) von Sauerstoff, der im Volumen des durch das Ansaugrohr (6) strömenden Gasgemischs enthalten ist und mittels des ersten Sensors (30) erfasst wird.

5. Verfahren nach einem der vorhergehenden Ansprüche, wobei der Schritt des Bestimmens des Kompensationsfaktors (k) nur unter stabilen Bedingungen des aufgeladenen Verbrennungsmotors (1), insbesondere des Ladedrucks (P) in dem Ansaugrohr (6), durchgeführt wird.

6. Verfahren nach einem der vorhergehenden Ansprüche und umfassend den weiteren Schritt des Speicherns der Werte der Menge (P, M$_{TOT}$) und der entsprechenden Kompensationsfaktoren (k) in einer Matrix (M).

7. Verfahren nach Anspruch 6, wobei jeder Wert der Menge (P, M$_{TOT}$) und der entsprechende Kompensationsfaktor (k), die in der Matrix (M) gespeichert sind, die Bedingungen erfüllen:

$$P_i - P_{i-1} > S_5 \; [16]$$

$$P_{i+1} - P_i > S_5 \; [17]$$

P aktueller Wert der Menge (P, M$_{TOT}$), die untersucht wird;
P$_{i-1}$ P$_{i+1}$ angrenzende Werte der Menge (P, M$_{TOT}$), bereits in der Matrix (M) gespeichert; und
S$_5$ erster Schwellenwert.

8. Verfahren nach Anspruch 7, wobei der Schwellenwert (Ss) in Abhängigkeit der Menge (P, M$_{TOT}$) variabel ist.

9. Verfahren nach einem der Ansprüche 6 bis 8 und umfassend die weiteren Schritte des

Bestimmens eines kritischen Werts (P*) der Menge (P, M$_{TOT}$) im Trend des Kompensationsfaktors k(P);
Bestimmens eines unteren Grenzwerts (P$_{MIN}$) der Menge (P, M$_{TOT}$) und eines oberen Grenzwerts (P$_{MAX}$) der Menge (P, M$_{TOT}$); und
Speicherns der Werte der Menge (P, M$_{TOT}$) und der entsprechenden Kompensationsfaktoren (k) in der Matrix (M), bis die folgenden Bedingungen erfüllt sind:

$$N_1 > S_6 \text{ für } P <= P^* \ [18]$$

$$N_2 > S_7 \text{ für } P > P^* \ [19]$$

$$P_{MIN\_C} - P_{MIN} < S_8 \ [20]$$

$$P_{MAX} - P_{MAX\_C} < S_9 \ [21]$$

P Menge ($P, M_{TOT}$);
$P^*$ kritischer Wert der Menge ($P, M_{TOT}$) im Trend des Kompensationsfaktors k(P);
$N_1, N_2$ Anzahl gelernter Werte des Kompensationsfaktors (k);
$P_{MIN}$ unterer Grenzwert der Menge ($P, M_{TOT}$);
$P_{MAX}$ oberer Grenzwert der Menge ($P, M_{TOT}$);
$P_{MIN\_C}$ unterer gelernter Wert der Menge ($P, M_{TOT}$), in der Matrix (M) gespeichert;
$P_{MAX\_C}$ oberer gelernter Wert der Menge ($P, M_{TOT}$), in der Matrix (M) gespeichert; und
$S_6, S_7, S_8, S_9$ Schwellenwerte.

**10.** Verfahren nach Anspruch 9, wobei der zweite und der dritte Wert ($S_6, S_7$) die folgenden Bedingungen erfüllen:

$$S_6 < (P^* - P_{MIN})/\min[s(P)] + \Delta_1 \text{ für } P_{MIN} < P < P^* \ [18^*]$$

$$S_7 < (P_{MAX} - P^*)/\min[s(P)] + \Delta_2 \text{ für } P^* < P < P_{MAX} \ [19^*]$$

$S_6, S_7$ Schwellenwerte;
$\Delta_1, \Delta_2$ Anpassungsspielraum;
$P^*$ kritischer Wert der Menge ($P, M_{TOT}$) im Trend des Kompensationsfaktors k(P);
$P_{MIN}$ unterer Grenzwert der Menge ($P, M_{TOT}$);
$P_{MAX}$ oberer Grenzwert ($P_{MAX}$) der Menge ($P, M_{TOT}$);
s(P) Verteilung der gelernten Werte des Kompensationsfaktors k(P) innerhalb der Matrix (M), die in Abhängigkeit der Menge ($P, M_{TOT}$) variabel ist.

**11.** Verfahren nach Anspruch 9 oder 10 und umfassend den weiteren Schritt des Speicherns der Werte der Menge ($P, M_{TOT}$) und der entsprechenden Kompensationsfaktoren (k) in der Matrix (M), die mittels der folgenden Formeln berechnet werden:

$$k(P) = ((k(PMAX\_C) - k(PMAX\_C-1))/ (PMAX\_C - P_{MAX\_C-1})) * g_{MAX} * (P - P_{MAX\_C}) + k(P_{MAX\_C}) \ [22] \qquad [22]$$

$$k(P) = ((k(P_{MIN\_C+1}) - k(P_{MIN\_C}))/ (P_{MIN\_C+1} - PMIN\_C)) * g_{MIN} * (P_{MIN\_C} - P) + k(P_{MIN\_C}) \ [23] \qquad [23]$$

$P_{MAX\_C}$ oberer Wert des Ladedrucks, in der Matrix (M) gespeichert;
$P_{MAX\_C-1}$ Wert des in der Matrix (M) gespeicherten Ladedrucks vor dem oberen Wert des in der Matrix (M) gespeicherten Ladedrucks;
P aktueller Ladedruck;
$g_{MAX}$ Korrekturkoeffizient, der in einer vorläufigen Einrichtungsphase ermittelt und gespeichert wird;
$P_{MIN\_C}$ unterer gelernter Wert des Ladedrucks, in der Matrix (M) gespeichert;
$P_{MIN\_C\_+1}$ gelernter Wert des in der Matrix (M) gespeicherten Ladedrucks, der auf den unteren gelernten Wert des in der Matrix (M) gespeicherten Ladedrucks folgt;
$g_{MIN}$ Korrekturkoeffizient, der in einer vorläufigen Einrichtungsphase ermittelt und gespeichert wird.

**12.** Verfahren nach einem der Ansprüche 6 bis 11 und umfassend den weiteren Schritt des Bestimmens, während des normalen Betriebs des aufgeladenen Verbrennungsmotors (1), der Kompensationsfaktoren (k) in Abhängigkeit der Menge ($P, M_{TOT}$) durch eine Interpolation der in der Matrix (M) gespeicherten gelernten Werte des Kompensationsfaktors k(P).

13. Verfahren nach einem der vorhergehenden Ansprüche und umfassend die weiteren Schritte des:

Bestimmens eines Versatzes (OF), vorzugsweise eines konstanten, um den Prozentsatz ($O_2$) von Sauerstoff, der im Volumen des durch das Ansaugrohr (6) strömenden Gasgemischs enthalten ist und mittels des ersten Sensors (30) erfasst wird, zu bestimmen; und
Bestimmens des Massenstroms des Niederdruck-Abgasrückführungskreislaufs, Niederdruck-EGR-Kreislaufs, ($EGR_{LP}$) in Abhängigkeit des Versatzes (OF).

14. Verfahren nach Anspruch 13 und umfassend die weiteren Schritte des:

Erfassens des Prozentsatzes ($O_2$) von Sauerstoff, der im Volumen des durch das Ansaugrohr (6) strömenden Gasgemischs enthalten ist, mittels des ersten Sensors (30);
Bestimmens des Versatzes (OF) durch die Lösung des folgenden Gleichungssystems

$$O_2 * k(P) + OF = O_{2\_REF} \ [34]$$

$$O_2 * k(P) + OF = O_{2\_EST} \ [35]$$

$O_{2\_EST}$ Prozentsatz von Sauerstoff, der im von außen kommenden Frischluftvolumen enthalten ist und mittels eines "Speed Density"-Modells und des Stroms eines Luftmengenmessers (7*), der dazu eingerichtet ist, die Masse des von dem Verbrennungsmotor (1) angesaugten Frischluftstroms zu erfassen, geschätzt wird;
$O_2$ Prozentsatz von Sauerstoff, der im Volumen des durch das Ansaugrohr (6) strömenden Gasgemischs enthalten ist und mittels des ersten Sensors (30) erfasst wird;
k (P) Kompensationsfaktor; und
$O_{2\_REF}$ Prozentsatz von Sauerstoff, der im Frischluftvolumen enthalten ist, das von außen durch das Ansaugrohr (6) strömt.

15. Verfahren nach einem der vorhergehenden Ansprüche und umfassend die weiteren Schritte des:

Bestimmens eines Gesamtkorrekturfaktors ($k_{TOT}$) in Abhängigkeit des Kompensationsfaktors (k); wobei der Gesamtkorrekturfaktor ($k_{TOT}$) mittels des Verhältnisses des Kompensationsfaktors (k) und eines Korrekturfaktors ($k_{AGE}$) erhalten wird; und
Bestimmens des prozentualen Massenstroms ($\%R_{EGR}$) des Niederdruck-Abgasrückführungskreislaufs, Niederdruck-EGR-Kreislaufs, ($EGR_{LP}$) in Abhängigkeit des Gesamtkorrekturfaktors ($k_{TOT}$).

16. Verfahren nach Anspruch 15 und umfassend den weiteren Schritt des Berechnens des Korrekturfaktors ($k_{AGE}$) für mindestens ein Paar signifikanter Werte ($P_{MIN\_AGE}$, $P_{MAX\_AGE}$) der Menge (P, $M_{TOT}$) mittels folgender Formel:

$$k_{AGE} = O_{2\_REF} / O_2 * k(P_{MIN\_AGE}, P_{MAX\_AGE}) \ [30]$$

$$P_{MIN\_C} < P_{MIN\_AGE} < P_{MIN\_C} + \Delta_{MIN}$$

$$P_{MAX\_C} - \Delta_{MAX} < P_{MAX\_AGE} < P_{MAX\_C}$$

$O_2$ Prozentsatz von Sauerstoff, der im Volumen des durch das Ansaugrohr (6) strömenden Gasgemischs enthalten ist und mittels des ersten Sensors (30) erfasst wird;
$O_{2\_REF}$ Prozentsatz von Sauerstoff, der im Frischluftvolumen enthalten ist, das von außen durch das Ansaugrohr (6) strömt;
k Kompensationsfaktor in Abhängigkeit der Menge (P, $M_{TOT}$);
$P_{MIN\_C}$ unterer gelernter Wert der Menge (P, $M_{TOT}$);
$P_{MAX\_C}$ oberer gelernter Wert der Menge (P, $M_{TOT}$);
$P_{MIN\_AGE}$ unterer signifikanter Wert der Menge (P, $M_{TOT}$);

$P_{MAX\_AGE}$ oberer signifikanter Wert der Menge (P, $M_{TOT}$);
$\Delta_{MIN}\ \Delta_{MAX}$ Mengen, die den Bereich der Intervalle definieren, in denen der Korrekturfaktor ($k_{AGE}$) berechnet werden soll.

17. Verfahren nach Anspruch 16 und umfassend den weiteren Schritt des Bestimmens der Korrekturfaktoren ($k_{AGE}$) durch eine Interpolation der gelernten Werte des Korrekturfaktors ($k_{AGE}$) für das Paar signifikanter Werte ($P_{MIN\_AGE}$, $P_{MAX\_AGE}$) der Menge (P, $M_{TOT}$).

18. Verfahren nach einem der Ansprüche 15 bis 17 und umfassend die weiteren Schritte des:

    Bestimmens eines Versatzes (OF), vorzugsweise eines konstanten, um den Prozentsatz ($O_2$) von Sauerstoff, der im Volumen des durch das Ansaugrohr (6) strömenden Gasgemischs enthalten ist und mittels des ersten Sensors (30) erfasst wird, zu bestimmen; und
    Bestimmens des Massenstroms des Niederdruck-Abgasrückführungskreislaufs, Niederdruck-EGR-Kreislaufs, ($EGR_{LP}$) in Abhängigkeit des Versatzes (OF).

19. Verfahren nach Anspruch 18 und umfassend die weiteren Schritte des:

    Erfassens des Prozentsatzes ($O_2$) von Sauerstoff, der im Volumen des durch das Ansaugrohr (6) strömenden Gasgemischs enthalten ist, mittels des ersten Sensors (30);
    Bestimmens des Versatzes (OF) durch die Lösung des folgenden Gleichungssystems

$$O_2 * k_{TOT} + OF = O_{2\_REF}\ [34]$$

$$O_2 * k_{TOT} + OF = O_{2\_EST}\ [35]$$

    $O_{2\_FST}$ Prozentsatz von Sauerstoff, der im von außen kommenden Frischluftvolumen enthalten ist und mittels eines "Speed Density"-Modells und des Stroms eines Luftmengenmessers (7*), der dazu eingerichtet ist, die Masse des von dem Verbrennungsmotor (1) angesaugten Frischluftstroms zu erfassen, geschätzt wird;
    $O_2$ Prozentsatz von Sauerstoff, der im Volumen des durch das Ansaugrohr (6) strömenden Gasgemischs enthalten ist und mittels des ersten Sensors (30) erfasst wird;
    $k_{TOT}$ Gesamtkorrekturfaktor in Abhängigkeit der Menge (P, $M_{TOT}$); und
    $O_{2\_REF}$ Prozentsatz von Sauerstoff, der im Frischluftvolumen enthalten ist, das von außen durch das Ansaugrohr (6) strömt.

20. Verfahren nach einem der Ansprüche 7 bis 19, wobei der Niederdruck-Abgasrückführungskreislauf, Niederdruck-EGR-Kreislauf, ($EGR_{LP}$) zwangsweise geschlossen wird, sodass der Massenstrom des Niederdruck-Abgasrückführungskreislaufs, Niederdruck-EGR-Kreislaufs, ($EGR_{LP}$), der durch das Ansaugrohr (6) strömt, gleich null ist, um die Initialisierung der Matrix (M) zu ermöglichen.

21. Verfahren nach Anspruch 20 und umfassend den weiteren Schritt des Erkennens, wenn eine oder mehrere der folgenden Bedingungen eintreten, um die Initialisierung der Matrix (M) zu ermöglichen:

$$|dn/\ \Delta t| < S_2\ [12]$$

$$|d\eta_{SP}/\ \Delta t| < S_3\ [13]$$

$$|dM_{AIR}\ /\ \Delta t| < S_4\ [14]$$

    dn Variation der Drehzahl (n) des Verbrennungsmotors (1);
    $d\eta_{SP}$ Variation des volumetrischen Wirkungsgrads;
    $dM_{AIR}$ Variation der Masse der von außen kommenden Frischluft, die durch das Ansaugrohr (6) strömt;
    $\Delta t$ Zeitintervall mit einer vorgegebenen Dauer und
    $S_2$, $S_3$, $S_4$ Schwellenwerte, die vorzugsweise in einer vorläufigen Einrichtungsphase bestimmt werden.

**22.** Verfahren nach Anspruch 21 und umfassend die weiteren Schritte des:

Erkennens, wenn der Massenstrom ($EGR_{LP}$) des Niederdruck-Abgasrückführungskreislaufs, Niederdruck-EGR-Kreislaufs, ($EGR_{LP}$), der durch das Ansaugrohr (6) strömt, gleich null ist und gleichzeitig der Kraftstoffstrom gleich null ist; und

Speicherns der Werte der Menge (P, $M_{TOT}$) und der entsprechenden Kompensationsfaktoren (k) in der Matrix (M) in Übereinstimmung mit Werten der Menge (P, $M_{TOT}$), die kleiner als der untere gelernte Wert ($P_{MIN\_C}$) sind, und mit Werten der Menge (P, $M_{TOT}$), die größer als der obere gelernte Wert ($P_{MAX\_C}$) sind.

**23.** Verfahren nach Anspruch 22 und umfassend die weiteren Schritte des:

Vergleichens des Werts der Menge (P, $M_{TOT}$) mit der Differenz zwischen dem unteren gelernten Wert ($P_{MIN\_C}$) und einem Toleranzwert ($\Delta P_{MIN}$) und

Speicherns des Werts der Menge (P, $M_{TOT}$) und des entsprechenden Kompensationsfaktors (k) in der Matrix (M), falls der Wert der Menge (P, $M_{TOT}$) kleiner oder gleich der Differenz zwischen dem unteren gelernten Wert ($P_{MIN\_C}$) und dem Toleranzwert ($\Delta P_{MIN}$) ist.

**24.** Verfahren nach Anspruch 22 oder 23 und umfassend die weiteren Schritte des:

Vergleichens des Werts der Menge (P, $M_{TOT}$) mit der Differenz zwischen dem oberen gelernten Wert ($P_{MAX\_C}$) und einem Toleranzwert ($\Delta P_{MAX}$) und

Speicherns des Werts der Menge (P, $M_{TOT}$) und des entsprechenden Kompensationsfaktors (k) in der Matrix (M), falls der Wert der Menge (P, $M_{TOT}$) größer oder gleich der Differenz zwischen dem oberen gelernten Wert ($P_{MAX\_C}$) und einem Toleranzwert ($\Delta P_{MAX}$) ist.

**25.** Verfahren nach einem der Ansprüche 20 bis 24 und umfassend den weiteren Schritt des Schließens einer Kraftstoffdampfsammelrampe, um den Durchgang von Kraftstoff zu verhindern und so die Initialisierung der Matrix (M) zu ermöglichen.

**26.** Verfahren nach einem der Ansprüche 20 bis 25 und umfassend den weiteren Schritt des Öffnens des Niederdruck-Abgasrückführungskreislaufs, Niederdruck-EGR-Kreislaufs, ($EGR_{LP}$) nach der Initialisierung der Matrix (M), sodass der Massenstrom des Niederdruck-Abgasrückführungskreislaufs, Niederdruck-EGR-Kreislaufs, ($EGR_{LP}$), der durch das Ansaugrohr (6) strömt, größer als null ist.

**27.** Verfahren nach Anspruch 25 und umfassend den weiteren Schritt des Zulassens des Durchgangs von Kraftstoff, sobald die Matrix (M) initialisiert wurde.

**28.** Verfahren nach einem der vorhergehenden Ansprüche und umfassend den weiteren Schritt des Neuinitialisierens des Kompensationsfaktors (k) und/oder des Korrekturfaktors ($k_{AGE}$) in im Wesentlichen regelmäßigen Intervallen und insbesondere nach einer bestimmten Kilometerzahl des aufgeladenen Verbrennungsmotors (1).

**Revendications**

**1.** Procédé pour déterminer le débit massique d'un circuit EGR de recirculation des gaz d'échappement à basse pression ($EGR_{LP}$) d'un moteur à combustion interne suralimenté (1) comprenant un collecteur d'admission (4), qui reçoit un mélange gazeux à travers un tuyau d'admission (6), et un turbocompresseur (12), qui est muni d'une turbine (13) et un surcompresseur (14) agencé le long du tuyau d'admission (6) ; le circuit EGR de recirculation des gaz d'échappement à basse pression ($EGR_{LP}$) comprend un tuyau de dérivation (26) partant d'un conduit d'échappement (10) en aval de la turbine (13) et rejoignant le tuyau d'admission (6) en amont du turbocompresseur (14) et une soupape EGR (27) ;

le moteur à combustion interne suralimenté (1) comprend, en outre, une unité de commande électronique (22) et un premier capteur (30), qui est conçu pour mesurer la quantité d'oxygène disponible dans le mélange gazeux s'écoulant à travers le tuyau d'admission (6) ; et un second capteur (23) pour mesurer la température et la pression du mélange gazeux présent dans un collecteur d'admission (4) ; le procédé comprend les étapes consistant à :

détecter, au moyen du premier capteur (30), le pourcentage ($O_2$) d'oxygène contenu dans le volume du mélange gazeux s'écoulant à travers le tuyau d'admission (6) ;

commander le moteur à combustion interne suralimenté (1) de manière à réduire à zéro le débit massique d'un circuit EGR de recirculation des gaz d'échappement à basse pression (EGR$_{LP}$) ;

déterminer le pourcentage (O$_{2\_REF}$) d'oxygène contenu dans le volume d'air frais provenant de l'extérieur qui s'écoule à travers le tuyau d'admission (6) à l'aide de la formule O$_{2\_REF}$=f(PSI$_{AIR\_IN}$, T$_{AIR\_IN}$) ([7]) ; et

déterminer un facteur de compensation (k), dans lequel le facteur de compensation (k) est variable en fonction de la pression de suralimentation (P) dans le tuyau d'admission (6) et est calculé comme le rapport entre le pourcentage (O$_{2\_REF}$) d'oxygène contenu dans le volume d'air frais provenant de l'extérieur qui s'écoule à travers le tuyau d'admission (6) et le pourcentage (O$_2$) d'oxygène contenu dans le volume du mélange gazeux qui s'écoule à travers le tuyau d'admission (6), qui est détecté au moyen du premier capteur (30) ;

commander le moteur à combustion interne suralimenté (1) de manière à alimenter un débit massique différent de zéro d'un circuit EGR de recirculation des gaz d'échappement à basse pression (EGR$_{LP}$) dès qu'un nombre donné de facteurs de compensation (k) est appris ; et

déterminer le débit massique du circuit EGR de recirculation des gaz d'échappement à basse pression (EGR$_{LP}$) en fonction dudit facteur de compensation (k) à l'aide de la formule R$_{EGR}$=1-(k*O$_2$/O$_{2\_REF}$) ([7]).

2. Procédé selon la revendication 1 et comprenant l'étape supplémentaire consistant à déterminer le débit massique en pourcentage (%R$_{EGR}$) du circuit EGR de recirculation des gaz d'échappement à basse pression (EGR$_{LP}$) dans le mélange gazeux s'écoulant à travers le tuyau d'admission (6) à l'aide de la formule :

$$\%R_{EGR} = [1 - (O_2/O_{2\_REF})] * 100 \ [6']$$

%R$_{EGR}$ débit massique en pourcentage du circuit EGR de recirculation des gaz d'échappement à basse pression (EGR$_{LP}$) dans le mélange gazeux s'écoulant à travers le tuyau d'admission (6) ;

O$_2$ pourcentage d'oxygène contenu dans le volume du mélange gazeux s'écoulant à travers le tuyau d'admission (6), qui est détecté au moyen du premier capteur (30) ; et

O$_{2\_REF}$ pourcentage d'oxygène contenu dans le volume d'air frais provenant de l'extérieur qui s'écoule à travers le tuyau d'admission (6).

3. Procédé selon la revendication 1 ou 2 et comprenant l'étape supplémentaire consistant à déterminer le pourcentage (O$_{2\_REF}$) d'oxygène contenu dans le volume d'air frais provenant de l'extérieur qui s'écoule à travers le tuyau d'admission (6) en fonction du niveau psychométrique (PSI$_{AIR\_IN}$), de la température (T$_{AIR\_IN}$) de la masse (M$_{AIR}$) d'air frais provenant de l'extérieur qui s'écoule à travers le tuyau d'admission (6), et de la pression (P$_{AIR\_IN}$) de la masse (M$_{AIR}$) d'air frais provenant de l'extérieur qui s'écoule à travers le tuyau d'admission (6).

4. Procédé selon la revendication 2 ou 3 et comprenant l'étape supplémentaire consistant à déterminer le débit massique en pourcentage (%R$_{EGR}$) du circuit EGR de recirculation des gaz d'échappement à basse pression (EGR$_{LP}$) en fonction du produit entre ledit facteur de compensation (k) et le pourcentage (O$_2$) d'oxygène contenu dans le volume du mélange gazeux s'écoulant à travers le tuyau d'admission (6), qui est détecté au moyen du premier capteur (30).

5. Procédé selon l'une quelconque des revendications précédentes, dans lequel l'étape consistant à déterminer le facteur de compensation (k) n'est effectuée que dans des conditions stables du moteur à combustion interne suralimenté (1), en particulier de la pression de suralimentation (P) dans le tuyau d'admission (6).

6. Procédé selon l'une quelconque des revendications précédentes et comprenant l'étape supplémentaire consistant à enregistrer, dans une matrice (M), les valeurs de la quantité (P, M$_{TOT}$) et les facteurs de compensation (k) correspondants.

7. Procédé selon la revendication 6, dans lequel chaque valeur de la quantité (P, M$_{TOT}$) et le facteur de compensation (k) correspondant enregistrés dans la matrice (M) remplissent les conditions :

$$P_i - P_{i-1} > S_5 \ [16]$$

$$P_{i+1} - P_i > S_5 \ [17]$$

P valeur actuelle de la quantité (P, M$_{TOT}$) étant examinée ;

$P_{i-1}$ $P_{i+1}$ valeurs adjacentes de la quantité (P, $M_{TOT}$) déjà enregistrées dans la matrice (M) ; et
$S_5$ première valeur seuil.

**8.** Procédé selon la revendication 7, dans lequel la valeur seuil (Ss) est variable en fonction de la quantité (P, $M_{TOT}$).

**9.** Procédé selon l'une quelconque des revendications 6 à 8, et comprenant les étapes supplémentaires consistant à

déterminer une valeur critique (P*) de la quantité (P, $M_{TOT}$) dans la tendance du facteur de compensation k(P) ;
déterminer une valeur limite inférieure ($P_{MIN}$) de la quantité (P, $M_{TOT}$) et une valeur limite supérieure ($P_{MAX}$) de la quantité (P, $M_{TOT}$) ; et
enregistrer, dans la matrice (M), les valeurs de la quantité (P, $M_{TOT}$) et les facteurs de compensation correspondants (k) jusqu'à ce que les conditions suivantes soient remplies :

$$N_1 > S_6 \text{ pour } P <= P^* \text{ [18]}$$

$$N_2 > S_7 \text{ pour } P > P^* \text{ [19]}$$

$$P_{MIN\_C} - P_{MIN} < S_8 \text{ [20]}$$

$$P_{MAX} - P_{MAX\_C} < S_9 \text{ [21]}$$

P quantité (P, $M_{TOT}$) ;
P* valeur critique de la quantité (P, $M_{TOT}$) dans la tendance du facteur de compensation k(P) ;
$N_1$, $N_2$ nombre de valeurs apprises du facteur de compensation (k) ;
$P_{MIN}$ valeur limite inférieure de la quantité (P, $M_{TOT}$) ;
$P_{MAX}$ valeur limite supérieure de la quantité (P, $M_{TOT}$) ;
$P_{MIN\_C}$ valeur apprise inférieure de la quantité (P, $M_{TOT}$) enregistrée dans la matrice (M) ;
$P_{MAX\_C}$ valeur apprise supérieure de la quantité (P, $M_{TOT}$) enregistrée dans la matrice (M) ; et
$S_6$, $S_7$, $S_8$, $S_9$ valeurs seuils.

**10.** Procédé selon la revendication 9, dans lequel les deuxième et troisième valeurs ($S_6$, $S_7$) remplissent les conditions suivantes :

$$S_6 < (P^* - P_{MIN})/min[s(P)] + \Delta_1 \text{ pour } P_{MIN} < P < P^* \text{ [18*]}$$

$$S_7 < (P_{MAX} - P^*)/min[s(P)] + \Delta_2 \text{ pour } P^* < P < P_{MAX} \text{ [19*]}$$

$S_6$, $S_7$ valeurs seuils ;
$\Delta_1$, $\Delta_2$ marges d'ajustements ;
P* valeur critique de la quantité (P, $M_{TOT}$) dans la tendance du facteur de compensation k(P) ;
$P_{MIN}$ valeur limite inférieure de la quantité (P, $M_{TOT}$) ;
$P_{MAX}$ valeur limite supérieure ($P_{MAX}$) de la quantité (P, $M_{TOT}$) ;
s(P) distribution des valeurs apprises du facteur de compensation k(P) à l'intérieur de la matrice (M), qui est variable en fonction de la quantité (P, $M_{TOT}$).

**11.** Procédé selon la revendication 9 ou 10 et comprenant l'étape supplémentaire consistant à enregistrer, dans la matrice (M), les valeurs de la quantité (P, $M_{TOT}$) et les facteurs de compensation (k) correspondants calculés au moyen des formules suivantes :

$$k(P) = ((k(P_{MAX\_C}) - k(P_{MAX\_C-1}))/ (P_{MAX\_C} - P_{MAX\_C-1})) * g_{MAX} * (P - P_{MAX\_C}) + k(P_{MAX\_C}) \text{ [22]} \qquad [22]$$

$$k(P) = ((k(P_{MIN\_C+1}) - k(P_{MIN\_C}))/ (P_{MIN\_C+1} - P_{MIN\_C})) * g_{MIN} * (P_{MIN\_C} - P) + k(P_{MIN\_C}) \text{ [23]} \qquad [23]$$

$P_{MAX\_C}$ valeur supérieure de la pression de suralimentation enregistrée dans la matrice (M) ;

$P_{MAX\_C-1}$ valeur de la pression de suralimentation enregistrée dans la matrice (M) avant la valeur supérieure de la pression de suralimentation enregistrée dans la matrice (M) ;

P pression de suralimentation actuelle ;

$g_{MAX}$ coefficient correcteur établi lors d'une phase préliminaire de mise en place et enregistré ;

$P_{MIN\_C}$ valeur inférieure apprise de la pression de suralimentation enregistrée dans la matrice (M) ;

$P_{MIN\_C\_+1}$ valeur apprise de la pression de suralimentation enregistrée dans la matrice (M) après la valeur apprise inférieure de la pression de suralimentation enregistrée dans la matrice (M) ;

$g_{MIN}$ coefficient correcteur établi lors d'une phase préliminaire de mise en place et enregistré.

**12.** Procédé selon l'une quelconque des revendications 6 à 11 et comprenant l'étape supplémentaire consistant à déterminer, pendant le fonctionnement normal du moteur à combustion interne suralimenté (1), les facteurs de compensation (k) en fonction de la quantité (P, $M_{TOT}$) à l'aide d'une interpolation des valeurs apprises du facteur de compensation k(P) enregistrées dans la matrice (M).

**13.** Procédé selon l'une quelconque des revendications précédentes et comprenant les étapes supplémentaires consistant à :

déterminer un décalage (OF), de préférence constant, pour déterminer le pourcentage ($O_2$) d'oxygène contenu dans le volume du mélange gazeux s'écoulant à travers le tuyau d'admission (6), qui est détecté au moyen du premier capteur (30) ; et

déterminer le débit massique du circuit EGR de recirculation des gaz d'échappement à basse pression ($EGR_{LP}$) en fonction dudit décalage (OF).

**14.** Procédé selon la revendication 13 et comprenant les étapes supplémentaires consistant à :

détecter, au moyen du premier capteur (30), le pourcentage ($O_2$) d'oxygène contenu dans le volume du mélange gazeux s'écoulant à travers le tuyau d'admission (6) ;

déterminer le décalage (OF) à l'aide de la résolution du système d'équation suivant

$$O_2 * k(P) + OF = O_{2\_REF} \ [34]$$

$$O_2 * k(P) + OF = O_{2\_EST} \ [35]$$

$O_{2\_EST}$ pourcentage d'oxygène contenu dans le volume d'air frais provenant de l'extérieur, qui est estimé au moyen d'un modèle « vitesse-densité » et du débit d'un débitmètre d'air (7*), qui est conçu pour détecter la masse du flux d'air frais aspiré par le moteur à combustion interne (1) ;

$O_2$ pourcentage d'oxygène contenu dans le volume du mélange gazeux s'écoulant à travers le tuyau d'admission (6), qui est détecté au moyen du premier capteur (30) ;

k (P) facteur de compensation ; et

$O_{2\_REF}$ pourcentage d'oxygène contenu dans le volume d'air frais provenant de l'extérieur qui s'écoule à travers le tuyau d'admission (6).

**15.** Procédé selon l'une quelconque des revendications précédentes et comprenant les étapes supplémentaires consistant à :

déterminer un facteur correctif global ($k_{TOT}$) en fonction du facteur de compensation (k) ; dans lequel le facteur correctif global ($k_{TOT}$) est obtenu au moyen du rapport entre le facteur de compensation (k) et un facteur correctif ($k_{AGE}$) ; et

déterminer le débit massique en pourcentage ($\%R_{EGR}$) du circuit EGR de recirculation des gaz d'échappement à basse pression ($EGR_{LP}$) en fonction dudit facteur correctif global ($k_{TOT}$).

**16.** Procédé selon la revendication 15 et comprenant l'étape supplémentaire consistant à calculer le facteur correctif ($k_{AGE}$) pour au moins une paire de valeurs significatives ($P_{MIN\_AGE}$, $P_{MAX\_AGE}$) de la quantité (P, $M_{TOT}$) au moyen de la formule suivante :

**EP 3 040 541 B1**

$$k_{AGE} = O_{2\_REF} / O_2 * k(P_{MIN\_AGE}, P_{MAX\_AGE}) \ [30]$$

$$P_{MIN\_C} < P_{MIN\_AGE} < P_{MIN\_C} + \Delta_{MIN}$$

$$P_{MAX\_C} - \Delta_{MAX} < P_{MAX\_AGE} < P_{MAX\_C}$$

$O_2$ pourcentage d'oxygène contenu dans le volume du mélange gazeux s'écoulant à travers le tuyau d'admission (6), qui est détecté au moyen du premier capteur (30) ;

$O_{2\_REF}$ pourcentage d'oxygène contenu dans le volume d'air frais provenant de l'extérieur qui s'écoule à travers le tuyau d'admission (6) ;

k facteur de compensation en fonction de la quantité (P, $M_{TOT}$) ;

$P_{MIN\_C}$ valeur apprise inférieure de la quantité (P, $M_{TOT}$) ;

$P_{MAX\_C}$ valeur apprise supérieure de la quantité (P, $M_{TOT}$) ;

$P_{MIN\_AGE}$ valeur significative inférieure de la quantité (P, $M_{TOT}$) ;

$P_{MAX\_AGE}$ valeur significative supérieure de la quantité (P, $M_{TOT}$) ;

$\Delta_{MIN}$ $\Delta_{MAX}$ quantités définissant la plage des intervalles dans lesquels calculer le facteur correctif ($k_{AGE}$).

**17.** Procédé selon la revendication 16 et comprenant l'étape supplémentaire consistant à déterminer les facteurs correctifs ($k_{AGE}$) à l'aide d'une interpolation des valeurs apprises du facteur correctif ($k_{AGE}$) pour la paire de valeurs significatives ($P_{MIN\_AGE}$, $P_{MAX\_AGE}$) de la quantité (P, $M_{TOT}$).

**18.** Procédé selon l'une quelconque des revendications 15 à 17 et comprenant les étapes supplémentaires consistant à :

déterminer un décalage (OF), de préférence constant, pour déterminer le pourcentage ($O_2$) d'oxygène contenu dans le volume du mélange gazeux s'écoulant à travers le tuyau d'admission (6), qui est détecté au moyen du premier capteur (30) ; et

déterminer le débit massique du circuit EGR de recirculation des gaz d'échappement à basse pression ($EGR_{LP}$) en fonction dudit décalage (OF).

**19.** Procédé selon la revendication 18 et comprenant les étapes supplémentaires consistant à :

détecter, au moyen du premier capteur (30), le pourcentage ($O_2$) d'oxygène contenu dans le volume du mélange gazeux s'écoulant à travers le tuyau d'admission (6) ;

déterminer le décalage (OF) à l'aide de la résolution du système d'équation suivant

$$O_2 * k_{TOT} + OF = O_{2\_REF} \ [34]$$

$$O_2 * k_{TOT} + OF = O_{2\_EST} \ [35]$$

$O_{2\_FST}$ pourcentage d'oxygène contenu dans le volume d'air frais provenant de l'extérieur, qui est estimé au moyen d'un modèle « vitesse-densité » et du débit d'un débitmètre d'air (7*), qui est conçu pour détecter la masse du flux d'air frais aspiré par le moteur à combustion interne (1) ;

$O_2$ pourcentage d'oxygène contenu dans le volume du mélange gazeux s'écoulant à travers le tuyau d'admission (6), qui est détecté au moyen du premier capteur (30) ;

$k_{TOT}$ facteur correctif global en fonction de la quantité (P, $M_{TOT}$) ; et

$O_{2\_REF}$ pourcentage d'oxygène contenu dans le volume d'air frais provenant de l'extérieur qui s'écoule à travers le tuyau d'admission (6).

**20.** Procédé selon l'une quelconque des revendications 7 à 19, dans lequel le circuit EGR de recirculation des gaz d'échappement à basse pression ($EGR_{LP}$) est fermé de force, de sorte que le débit massique du circuit EGR de recirculation des gaz d'échappement à basse pression ($EGR_{LP}$) qui s'écoule à travers le tuyau d'admission (6) soit égal à zéro, de manière à permettre l'initialisation de la matrice (M).

**21.** Procédé selon la revendication 20 et comprenant l'étape supplémentaire consistant à reconnaître lorsqu'une ou

32

plusieurs des conditions suivantes se produisent, de manière à permettre l'initialisation de la matrice (M) :

$$|dn/ \Delta t| < S_2 \; [12]$$

$$|d\eta_{SP}/ \Delta t| < S_3 \; [13]$$

$$|dM_{AIR} / \Delta t| < S_4 \; [14]$$

dn variation de la vitesse (n) du moteur à combustion interne (1) ;
d$\eta_{SP}$ variation de l'efficacité volumétrique ;
dM$_{AIR}$ variation de la masse d'air frais provenant de l'extérieur qui s'écoule à travers le tuyau d'admission (6) ;
$\Delta$t intervalle de temps d'une durée prédéterminée ; et
S$_2$, S$_3$, S$_4$ valeurs seuils, qui sont de préférence déterminées lors d'une phase d'établissement préliminaire.

**22.** Procédé selon la revendication 21 et comprenant les étapes supplémentaires consistant à :

reconnaître lorsque le débit massique (EGR$_{LP}$) du circuit EGR de recirculation des gaz d'échappement à basse pression (EGR$_{LP}$) qui s'écoule à travers le tuyau d'admission (6) est égal à zéro et que, simultanément, le débit de carburant est égal à zéro ; et
enregistrer dans la matrice (M) les valeurs de la quantité (P, M$_{TOT}$) et les facteurs de compensation (k) correspondants en correspondance avec des valeurs de la quantité (P, M$_{TOT}$) qui sont inférieures à la valeur apprise inférieure (P$_{MIN\_C}$) et avec des valeurs de la quantité (P, M$_{TOT}$) qui sont supérieures à la valeur apprise supérieure (P$_{MAX\_C}$).

**23.** Procédé selon la revendication 22 et comprenant les étapes supplémentaires consistant à :

comparer la valeur de la quantité (P, M$_{TOT}$) à la différence entre la valeur apprise inférieure (P$_{MIN\_C}$) et une valeur de tolérance ($\Delta$P$_{MIN}$) ; et
enregistrer dans la matrice (M) la valeur de la quantité (P, M$_{TOT}$) et le facteur de compensation correspondant (k), au cas où la valeur de la quantité (P, M$_{TOT}$) est inférieure ou égale à la différence entre la valeur apprise inférieure (P$_{MIN\_C}$) et la valeur de tolérance ($\Delta$P$_{MIN}$).

**24.** Procédé selon la revendication 22 ou 23 et comprenant les étapes supplémentaires consistant à :

comparer la valeur de la quantité (P, M$_{TOT}$) à la différence entre la valeur apprise supérieure (P$_{MAX\_C}$) et une valeur de tolérance ($\Delta$P$_{MAX}$) ; et
enregistrer dans la matrice (M) la valeur de la quantité (P, M$_{TOT}$) et le facteur de compensation (k) correspondant, au cas où la valeur de la quantité (P, M$_{TOT}$) est supérieure ou égale à la différence entre la valeur apprise supérieure (P$_{MAX\_C}$) et une valeur de tolérance ($\Delta$P$_{MAX}$).

**25.** Procédé selon l'une quelconque des revendications 20 à 24 et comprenant l'étape supplémentaire consistant à fermer un collecteur d'accumulation de vapeur de carburant pour interdire le passage de carburant afin de permettre l'initialisation de la matrice (M).

**26.** Procédé selon l'une quelconque des revendications 20 à 25 et comprenant l'étape supplémentaire consistant à ouvrir le circuit EGR de recirculation des gaz d'échappement à basse pression (EGR$_{LP}$) après l'initialisation de la matrice (M), de sorte que le débit massique du circuit EGR de recirculation des gaz d'échappement à basse pression (EGR$_{LP}$) qui s'écoule à travers le tuyau d'admission (6) soit supérieur à zéro.

**27.** Procédé selon la revendication 25 et comprenant l'étape supplémentaire consistant à autoriser le passage de carburant une fois que la matrice (M) a été initialisée.

**28.** Procédé selon l'une quelconque des revendications précédentes et comprenant l'étape supplémentaire consistant à réinitialiser le facteur de compensation (k) et/ou le facteur de correction (k$_{AGE}$) à intervalles sensiblement réguliers et, en particulier, après un nombre donné de km parcourus par le moteur à combustion interne suralimenté (1).

FIG.1

$k(P)$

$k(P_{MIN\_C})$

$k(P^*)$
$k(P_{MAX\_C})$

$P$

$N_1$

$N_2$

$P_{MIN\_C}$

$P^*$

$P_{MAX\_C}$

FIG.2

M

| $k(P)$ | | | | $k(P_{MIN\_C})$ | …. | …. | $k(P_{MAX\_C})$ | | | |
|---|---|---|---|---|---|---|---|---|---|---|
| $P$ | $P_{MIN}$ | | | $P_{MIN\_C}$ | …. | …. | $P_{MAX\_C}$ | | | $P_{MAX}$ |

FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013268176 A1
- WO 2009037543 A1